# EUROPEAN PATENT SPECIFICATION

(11) **EP 3 540 468 B1**
(45) Date of publication and mention of the grant of the patent: **12.07.2023**
(21) Application number: 19154858.5
(22) Date of filing: 31.01.2019
(51) Int. Cl.: G01S 7/4865, G01S 17/10

(54) **OBJECT DETECTOR, MOBILE OBJECT, AND OBJECT DETECTION METHOD**
OBJEKTDETEKTOR, MOBILES OBJEKT UND OBJEKTERKENNUNGSVERFAHREN
DÉTECTEUR D'OBJET, OBJET MOBILE ET PROCÉDÉ DE DÉTECTION D'OBJET

(30) Priority: 13.03.2018 JP 2018044851
(43) Date of publication of application: 18.09.2019
(73) Proprietor: Ricoh Company, Ltd., Tokyo 143-8555 (JP)
(72) Inventor: NISHIO, Takuei, Tokyo, 143-8555 (JP); NAKAMURA, Tadashi, Tokyo, 143-8555 (JP)
(74) Representative: J A Kemp LLP

(56) References cited:
- EP-A1- 3 070 497
- EP-A1- 3 081 956
- DE-A1-102010 038 566
- DE-A1-102016 011 339
- US-A- 5 532 813
- US-A1- 2013 003 077
- US-A1- 2014 118 718
- US-B2- 8 638 449

## Description

### BACKGROUND

### Technical Field

Embodiments of the present disclosure relate to an object detector, a mobile object, and an object detection method.

### Background Art

An apparatus is known in which a light source system provided with a light emitter emits light to a projection range and a light detection system provided with a light receiver receives light reflected or scattered from an object within the projection range so as to detect information (for example, information regarding the distance to the object and information regarding the presence or absence of the object) regarding the object (for example, JP-2002-31685-A).

However, the apparatus disclosed in JP-2002-31685-A has room for improvement in detecting the conditions of the light source system and light detection system while substantially preventing cost increase and enlargement of the apparatus size.

US 8,638,449 B2 discloses a LiDAR-type system which has multiple light sources 8A to 8C which are driven in sequence and the returning light directed to a single photodetector 12.

US 2014/118718 A1 discloses a LiDAR system in which a reference beam 24, which is directed from the laser to the detector via an internal path, is coherently combined with the beam that has reflected from the target.

US 2013/003077 A1 relates to a tomographic imaging system.

EP 3 070 497 A1 discloses an object detecting device, a sensing device, and a mobile object device.

### SUMMARY

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes.

In one aspect of this disclosure, there is provided an object detector as defined in the appended claims.

In another aspect of this disclosure, there is provided an improved mobile object including the object detector.

In still another aspect of this disclosure, there is provided an improved method of detecting an object as defined in the appended claims.

The embodiments of the present disclosure can detect the conditions of the light source system and light detection system while substantially preventing cost increase and enlargement of the apparatus size.

### BRIEF DESCRIPTION OF THE DRAWINGS

The aforementioned and other aspects, features, and advantages of the present disclosure will be better understood by reference to the following detailed description when considered in connection with the accompanying drawings, wherein:
FIG. 1 is a block diagram of a configuration of an object detector according to an embodiment of the present disclosure;
FIG. 2A is an illustration of a projection optical system and a synchronous system according to an embodiment of the present disclosure;
FIG. 2B is an illustration of a light receiving optical system according to an embodiment of the present disclosure;
FIG. 2C is an illustration of a relation of the projection optical system in FIG. 2A and the light receiving optical system in FIG. 2B according to an embodiment of the present disclosure;
FIG. 3A is an illustration of a configuration of an optical system of an object detector according to an embodiment of the present disclosure;
FIG. 3B is an illustration of an optical system of an object detector according to variation 1 of an embodiment of the present disclosure;
FIG. 3C is an illustration of an optical system of an object detector according to variation 2 of the present disclosure;
FIG. 4 is a timing chart of a synchronizing signal and a LD drive signal;
FIG. 5A is a timing chart of a light-emitting pulse and a light-receiving pulse;
FIG. 5B is a timing chart of a binarized light-emitting pulse and a binarized light-receiving pulse;
FIG. 6 is an illustration of a relation between a projection optical system and a light receiving optical system according to comparative example 1;
FIGs. 7A and 7B are illustrations of configuration examples of a light detection system according to embodiments of the present disclosure;
FIGs. 8A to 8C are illustrations for explaining a method of determining presence or absence of operation failure in a light source and a light detection system using a comparator, according to embodiments of the present disclosure;
FIGs. 9A to 9C are illustrations for explaining a method of determining presence or absence of operation failure in a light source and a light detection system using a A/D comparator, according to embodiments of the present disclosure;
FIGs. 10A and 10B each is an illustration of the relation between a detection field and light receivers according to a different embodiment;
FIGs. 10C and 10D each is an illustration of the relation between the light receivers and a light beam striking the light receivers according to a different embodiment;
FIG. 11A ((a), (c), (e), and (g)) and 11B ((b), (d), (f), and (h)) are graphs of output of the light receivers according to different embodiments of the present disclosure;
FIG. 12 is an illustration for explaining the relation between light receivers and a light beam striking the light receivers (irradiation area) in detecting the conditions;
FIG. 13A ((a), (d), (g), (j)) is an illustration of a case in which the light emitter and the light receivers operate normally under the conditions of FIG. 12;
FIG. 13B ((b), (e), (h), and (k)) is an illustration of a case in which one of the light receivers is in failure under the conditions of FIG. 12;
FIG. 13C ((c), (f), (i), and (l)) is an illustration of a case in which the light emitter is in failure under the conditions of FIG. 12;
FIGs. 14A to 14C are illustrations for explaining a first method of detecting the conditions of the light source system and the light detection system;
FIGs. 15A to 15C are illustrations for explaining a second method of detecting the conditions of the light source system and the light detection system;
FIGs. 16A and 16B are illustrations for explaining a method of detecting variations in light-receptive sensitivity;
FIG. 17 is an illustration of the relation between light receivers and light beams striking the light receivers in detecting the conditions of the light source and the light detection system, according to the invention as claimed;
FIG. 18 is an illustration for explaining an operation example 1 of the light source and wave processing circuits operating properly in the configuration of FIG. 17;
FIG. 19 is an illustration for explaining an operation example 2 (there are variations in amount of light emission) of the light source and the wave processing circuits in the configuration of FIG. 17;
FIG. 20A to 20E are illustrations for explaining an operation example 3 (there are variations in amount of light emission and in light-receptive sensitivity) of the light source and the wave processing circuits in the configuration of FIG. 17;
FIG. 21 is an illustration for explaining the relation between light receivers and light beams striking the light receivers in detecting object information;
FIG. 22 is an illustration for explaining the relation between light receivers and light beams striking the light receivers in detecting the conditions of the light source and the light detection system;
FIG. 23A is an illustration of a projection optical system according to variation 3 of an embodiment of the present disclosure;
FIG. 23B is an illustration of a light-receptive optical system according to variation 3 of an embodiment of the present disclosure;
FIG. 23C is an illustration of the projection optical system and the light-receptive optical system according to variation 3 of an embodiment of the present disclosure;
FIG. 24A is an illustration of a projection optical system according to variation 4 of an embodiment of the present disclosure;
FIG. 24B is an illustration of a light-receptive optical system according to variation 4 of an embodiment of the present disclosure;
FIG. 25A is an illustration of a projection optical system according to variation 5 of an embodiment of the present disclosure;
FIG. 25B is an illustration of a light-receptive optical system according to variation 5 of an embodiment of the present disclosure;
FIG. 25C is an illustration of the projection optical system and the light-receptive optical system according to variation 5 of an embodiment of the present disclosure;
FIG. 26 is a circuit diagram of an LD drive section;
FIGs. 27A and 27B each is a block diagram of an example configuration of a light detection system whose light-receptive sensitivity is variable according to a different embodiment;
FIGs. 28A to 28C are illustrations for explaining the effects obtained by maintaining output voltage of the waveform processing circuit at constant;
FIGs. 29A to 29C are illustrations of examples in which the amount of light emission and the light-receptive sensitivity are detected with a common threshold voltage between the object information detection and the condition detection;
FIGs. 30A to 30C are illustrations of examples in which the amount of light emission and the light-receptive sensitivity are detected with different threshold voltages between the object information detection and the condition detection;
FIGs. 31A to 31C are illustrations for explaining a reduction in amount of light emission and light-receptive sensitivity in detecting the conditions plural times with different threshold values;
FIG. 32 is a block diagram of a sensing apparatus;
FIG. 33 is a flowchart of a ranging process 1;
FIG. 34 is a block diagram of an example configuration 1 of a control system;
FIG. 35 is a flowchart of a ranging process 2;
FIG. 36 is a block diagram of an example configuration 2 of the control system;
FIG. 37 is a flowchart of a ranging process 3;
FIG. 38 is a block diagram of an example configuration 3 of the control system;
FIG. 39 is a flowchart of a ranging process 4;
FIG. 40 is a block diagram of an example configuration 4 of the control system;
FIG. 41 is a flowchart of a ranging mode 1;
FIG. 42 is a flowchart of a ranging mode 2;
FIG. 43 is a flowchart of a ranging mode 3;
FIG. 44 is a flowchart of a failure detection mode 1;
FIG. 45 is a flowchart of a failure detection mode 2;
FIG. 46 is a flowchart of a failure detection mode 3;
FIG. 47 is a flowchart of a first mode of correcting a variation in amount of light emission;
FIG. 48 is a flowchart of a second mode of correcting a variation in amount of light emission;
FIG. 49 is a flowchart of a first mode of correcting a variation in light-receptive sensitivity;
FIG. 50 is a flowchart of a second mode of correcting a variation in light-receptive sensitivity; and
FIG. 51 is an illustration of a configuration of a light detection and ranging device (LiDAR) according to comparative example 2.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results. As used herein, the singular forms "a", "an", and "the" are intended to include the plural forms as well, unless the context clearly indicates otherwise.

Although the embodiments are described with technical limitations with reference to the attached drawings, such description is not intended to limit the scope of the disclosure and all of the components or elements described in the embodiments of this disclosure are not necessarily indispensable.

Embodiments of the present disclosure are described in detail with reference to the drawings. Like reference numerals designate identical or corresponding components throughout the several views and a description of same is omitted.

With reference to the figures, an object detector 100 according to an embodiment of the present disclosure is described below.

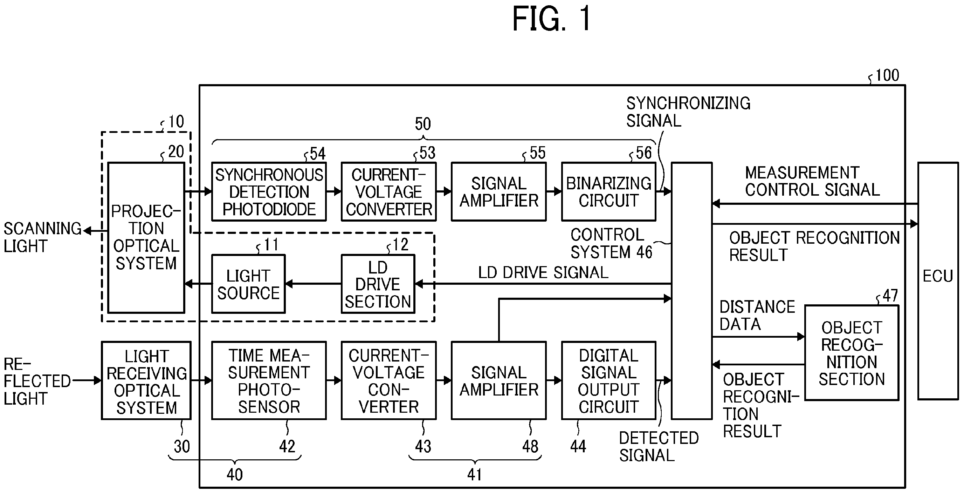

FIG. 1 is a block diagram of a schematic configuration of the object detector 100.

The object detector 100 is a scanning LiDAR (Light Detection and Ranging) device mountable, for example, in a vehicle such as a car) as a mobile object. The object detector 100 is configured to emit light to a projection range and receive light reflected or scattered from an object (for example, a preceding vehicle, a parked vehicle, an obstacle, and a pedestrian), so as to detect information regarding the object (hereinafter, referred to as object information) such as information regarding the present or absence of the object or the information regarding the distance to the object The object detector 100 is powered by, for example, the vehicle battery.

That is, the object detector 100 serves as an object presence/absence determination device, a distance measurement device (range finder), and an object recognition device (a device that recognizes, for example, the position, shape, and size of an object).

As illustrated in FIG. 1 for example, the object detector 100 includes, for example, a phototransmitter system 10, a light receiving system 40, a waveform processing circuit 41, a digital signal output circuit 44, a control system46, a synchronous system 50, an object recognition section 47.

The phototransmitter system 10 includes a light source 11, a laser diode (LD) drive section 12, and a projecting optical system 20. The light source 11 includes at least one light emitter. In the present embodiment, a laser diode (LD) is used as the light emitter. Hereinafter, a system including the light source 11 and the LD drive section 12 is also referred to as a light source system.

The LD is also referred to as an edge-surface emitting laser and is driven by the LD drive section 12 to emit a laser beam. The LD drive section 12 causes the LD to illuminate (emit light) in response to an LD drive signal as a trigger output from the control system46. The LD drive section 12 includes, for example, a capacitor connected to the LD to supply electric current to the LD, a transistor to switch conduction and non-conduction between the capacitor and the LD 11, and a charger to charge the capacitor. The control system 46 starts or stops measurement in response to a measurement control signal (a measurement start signal and a measurement stop signal) from an electronic control unit (ECU) on vehicle.

Note that, the LD is used as the light emitter of the light source 11, but no limitation is intended thereby. In some embodiment, for example, an end-surface emitting laser (laser diode (LD)), a light-emitting diode (LED), organic electroluminescence (EL) element, and a laser other than semiconductor lasers may be used.

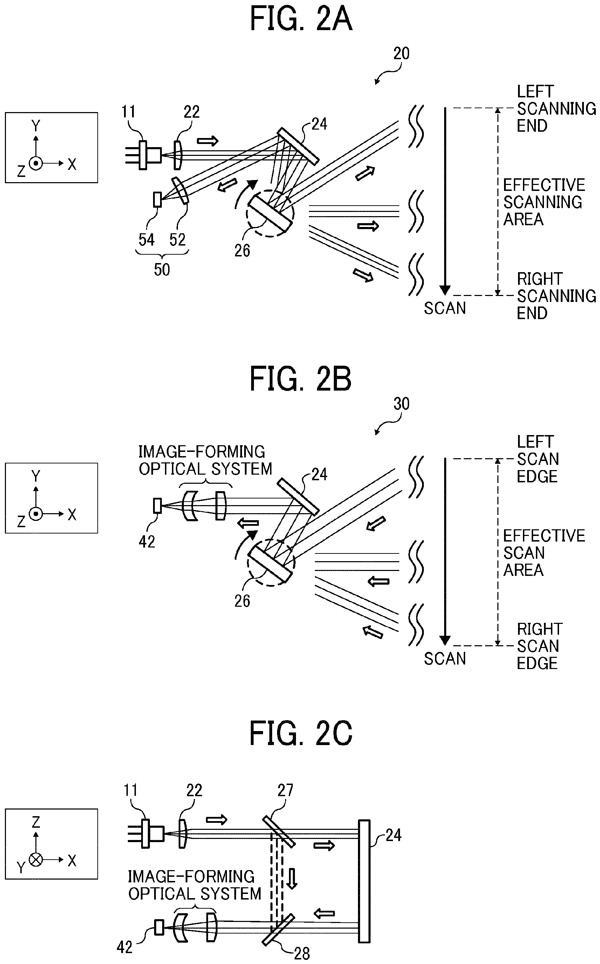

FIG. 2A schematically illustrates the projection optical system 20 and the synchronous system 50. FIG. 2B schematically illustrates the light receiving optical system 30. In the following description of FIG. 2A, FIG. 2B, and FIG. 2C, an XYZ three-dimensional rectangular coordinate system is referred to where appropriate. In the XYZ three-dimensional rectangular coordinate system, the Z-axis direction corresponds to the vertical direction.

As illustrated in FIG. 2A and 2C, the projection optical system 20 includes, for example, a coupling lens 22 as a light emitting optical system, a beam splitter 27 as a branch element (FIG. 2C), a reflecting mirror 24, and a rotating mirror 26 as a light deflector. The coupling lens 22 is disposed in the optical path of light emitted from the light source 11. The beam splitter 27 is disposed in the optical path of light that has passes through the coupling lens 22. The reflecting mirror 24 is disposed in the optical path of the light that has been transmitted through the beam splitter 27. The rotating mirror 26 is disposed in the optical path of light reflected from the reflecting mirror 24. In the present embodiment, the reflecting mirror 24 is disposed in the optical path between the beam splitter 27and the rotating mirror 26, so that the optical path is folded so as to reduce the size of the object detector 100. Hereinafter, the optical path of light that travels from the beam splitter 27 to the reflecting mirror 24, to the rotating mirror 26, and to the projection range is also referred to as a first optical path.

The light emitted from the light source 11 is shaped into light of a predetermined beam profile by the coupling lens 22. Subsequently, some light rays of the light (beam) are transmitted through the beam splitter 27, and some other light rays are reflected by the beam splitter 27. The light rays transmitted through the beam splitter 27 are reflected by the reflecting mirror 24 and is deflected around the Z axis by the rotating mirror 26. The light rays reflected by the beam splitter 27 are directed to strike the beam splitter 28 (FIG. 2C) as a combiner. Hereinafter, the optical path of light that travels from the beam splitter 27 to the beam splitter 28 is also referred to as a second optical path.

The light deflected by the rotating mirror 26 (light passing through the first optical path) within the predetermined range of deflection around the Z-axis corresponds to the light (light subjected to the detection of object information) projected by the projection optical system 20, that is, the light projected from the object detector 100. Accordingly, hereinafter, the first optical path is referred to also as an optical path for detecting the object information.

The rotating mirror 26 includes a plurality of reflection planes around the axis of rotation (axis Z) to reflect (deflect) the light reflected from the reflecting mirror 24 rotating around the axis of rotation, so that the light unidimensionally scan the effective scanning area (projection range) corresponding to the range of deflection in a horizontal one-axis direction (Y-axis direction). In this case, the range of deflection, i.e., the effective scan area lies on +X side relative to the object detector 100. Hereinafter, the direction of rotation of the rotating mirror 26 is referred to also as a direction of rotation of mirror".

As illustrated in FIG. 2A, the rotating mirror 26 includes two reflecting planes opposed to each other. However, the present disclosure is not limited to this configuration. In some embodiments, the rotating mirror 26 may include one reflecting plane or three or more reflecting planes. Alternatively, in some embodiments, the rotating mirror 26 includes at least two reflection planes, which are tilted at different angles with respect to the axis of rotation (axis Z), to switch an area to be scanned and detected in Z-axis direction.

Further, a light deflector may be any other mirror, such as a polygon mirror (rotating polygon mirror), a galvano mirror, or a micro electro mechanical system (MEMS) mirror, instead of the rotating mirror 26.

As illustrated in FIGs. 1 and 2B, the light receiving system 40 includes a light receiving optical system 30 and a time measurement photosensor (PS) (photodetector) 42. The light receiving optical system 30 is disposed in the optical path of light emitted from the projection optical system 20 to the effective scanning area (projection scan) and reflected/scattered from the object within the effective scanning area or in the optical path of light reflected by the beam splitter 27. The time measurement PS 42 is disposed in the optical path of light that has passed through the light receiving optical system 30. The time measurement PS 42 includes at least one light receiver to receive the light and photoelectrically convert the light into an electrical signal, outputting the electrical signal. The electrical signal output from the time measurement PS 42 is an electric current (output current) and is sent to the waveform processing circuit 41. In the present embodiment, a photodiode (PD) is used as the light receiver. The light detector is referred to also as a photodetector or receiving element.

As illustrated in FIGs. in 2B and 2C, the light receiving optical system 30 includes a rotating mirror 26 as a light deflector, a reflecting mirror 24, a beam splitter 28 as a combiner, and an image-forming optical system. The rotating mirror 26 is disposed in the optical path of light projected from the light projecting optical system 20 and reflected or scattered by the object within the effective scanning area. The reflecting mirror 24 is disposed in the optical path of light deflected by the rotating mirror 26. The beam splitter 28 is disposed in the optical path of light deflected by the rotating mirror 26 and reflected by the rotating mirror 24 and in the optical path of light reflected by the beam splitter 27. The image-forming optical system is disposed in the optical path of light reflected by or transmitted through the beam splitter 28. The image-forming optical system forms an image of the light on the time measurement PS 42. Hereinafter, the optical path from the beam splitter 28 to the time measurement PS 42 is also referred to as a third optical path.

The optical path that includes the second optical path and the third optical path is an optical path (hereinafter also referred to as an optical path for detecting the conditions) for detecting the conditions of the light source system or the light detection system as described in detail later.

Light projected from the projection optical system 20 and reflected or scattered from an object within the effective scanning area is deflected by the rotating mirror 26. Subsequently, the light is further reflected by the reflecting mirror 24, transmitted through the beam splitter 28, and is directed to hit the time measurement PS 42 via the image-forming optical system.

The light reflected by the beam splitter 27 is reflected by the beam splitter 28 and is directed to hit the time measurement PS 42 via the image-forming optical system.

In the present embodiment, the projection optical system 20 and the light receiving optical system 30 are housed in the same casing. The casing has an opening in the optical path of light emitted from the projection optical system 20 and an opening in the optical path of light striking the light receiving optical system 30. The openings are sealed with a window (a light transmission window member). For example, the window may be made of glass or resin.

FIG. 2C is an illustration of the optical path from the light source 11 to the reflecting mirror 24 and the optical path from the reflecting mirror 24 to the time measurement PS 42.

As illustrated in FIG. 2C, the projection optical system 20 and the light receiving optical system 30 are aligned in Z-axis direction. The rotating mirror 26 and the reflecting mirror 24 are shared by the projection optical system 20 and the light receiving optical system 30. With this configuration, the positional deviation between the illumination range on the object (the area in which the object is illuminated with light) and the light receivable area of the time measurement PS 42 (the area in which light is receivable by the time measurement PS 42) can be reduced. Accordingly, an object can be stably detected. In this case as well, the reflecting mirror 24 is disposed between the rotating mirror 26 as the light deflector and the beam splitter 28 as the combiner so that the optical path is folded to reduce the size of the object detector 100.

In this case, the image-forming optical system includes two lenses (image-forming lenses). However, in some embodiments, the image-forming optical system may include a single lens or three or more lenses. Alternatively, a mirror optical system may be employed in the image-forming optical system.

Note that since the time measurement PS 42 is set to high sensitivity to allow for a detection of a distant object, light reflected by the beam splitter 27 and directed to the second optical path may be of low power. For example, assuming that the reflectance of the beam splitter 27 is 1% and the power of light emission of the light emitter is 10 watts (W), the power of light hitting the time measurement PS 42 is 10 mW corresponding to 0.1% of the power of light emission of the light emitter, which is still sufficient for detection.

That is, a reduction in power of light that passes through the first optical path due to the separation of the optical path of light emitted from the light source 11 into the first optical path and the second optical path at the beam splitter 27 does not cause any trouble.

Further, one (a first light beam) of the two light beams separated from the beam splitter 27, that is, the light (hereinafter also referred to light for detecting the object information) that has passed through the optical path for detecting the conditions (the optical path that includes the second optical path and the third optical path is an optical path) reaches the time measurement PS 42 earlier than the other separated light beam (a second light beam) that has passed through the optical path for detecting the object information (the first optical path) and has been reflected or scattered from a target (an object to be measured) reaches the time measurement PS 42. Accordingly, which light has reached the time measurement PS 42 can be identified between the light for detecting the object information and the light for detecting the conditions.

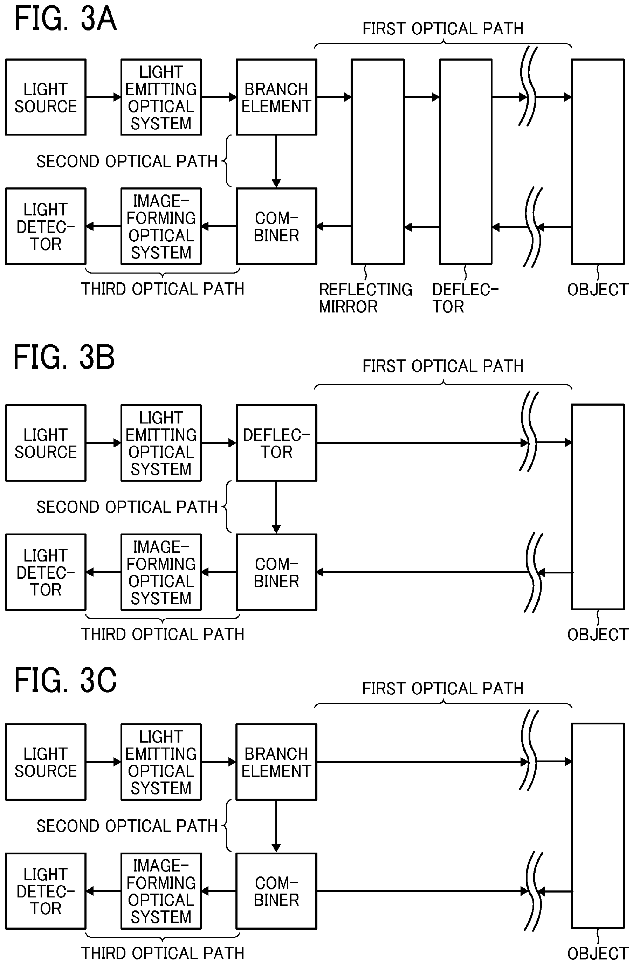

FIG. 3A is an illustration of an example configuration of an optical system of the above-described object detector 100 according to an embodiment of the present disclosure.

In the optical system of FIG. 3A, light emitted from the light source 10 passes through the light emitting optical system and is separated by the branch element into first light beam and second light beam, which creates the second optical path. Further, the first light beam is reflected by the reflecting mirror, deflected by the light deflector, and is directed to an object, which creases the first optical path.

In the optical system of FIG. 3A, the second light beam that has passed through the second optical path further passes through the combiner and the image-forming optical system and is directed to the light detector, which creates the third optical path.

Note that, the first light beam that has passed through the first optical path is then reflected or scattered from an object and strikes the light deflector and the reflecting mirror. Subsequently, the light further passes through the combiner and the image-forming optical system (the third optical path) and is directed to the light detector.

The method of creating the first optical path and the second optical path is not limited to the example of FIG. 3A, and may be modified as appropriate.

In variation 1 of an embodiment of the present disclosure as illustrated in FIG. 3B for example, the first optical path may be an optical path in which the light emitted from the light source 10 is deflected by a rotating light deflector at a first timing, and the second optical path may be an optical path in which the light emitted from the light source 10 is deflected by the light deflector at a second timing.

In variation 2 of an embodiment of the present disclosure as illustrated in FIG. 3C for another example, any reflecting mirror and light deflector may not be disposed in the first optical path that starts from the branch element and in the optical path of light reflected or scattered from the object. In this case, a light source in which a plurality of light emitters is disposed in array in at least horizontal direction is preferably used so as to obtain a projection range at least in the horizontal direction.

The waveform processing circuit 41 includes, for example, a current-voltage converter 43 that converts a current output from the time measurement PS 42 into a voltage signal (received-light signal), and a signal amplifier 48 including, for example, an amplifier that amplifies a signal (voltage signal) output from the current-voltage converter 43.

The output signal of the waveform processing circuit 41, that is, the output signal of the signal amplifier 48 is sent to the digital signal output circuit 44 and the control system46.

In some embodiments, the waveform processing circuit 41 may not include the signal amplifier 48.

The digital signal output circuit 44 processes the output signal of the waveform processing circuit 41 and outputs a digital signal.

As the digital signal output circuit 44, a binarization circuit including, for example, a comparator and an operational amplifier is used.

This binarization circuit binarizes the output signal of the waveform processing circuit 41 with reference to the threshold voltage Vth and outputs a high level signal as a detection signal to the control system 46 during the time in which the output signal exceeds the threshold voltage Vth.

In the present disclosure, the time measurement PS 42, the waveform processing circuit 41, and the digital signal output circuit 44 constitutes a light detection system.

In some embodiments, instead of the binarization circuit, for example, an analog-to-digital (A/D) converter may be used as the digital signal output circuit 44.

As illustrated in FIG. 1 and FIG. 2A, the synchronous system 50 includes a synchronous lens 52, a synchronous detecting PS 54, a current converter 53, a signal amplifier 55, and a binarizing circuit 56. The synchronous lens 50 is disposed in the optical path in which light is emitted from the light source 11, passes through the coupling lens 22, is reflected from the reflecting mirror 24, deflected by the rotating mirror 26, and reflected again by the reflecting mirror 24. The synchronous detection PS 54 is disposed in the optical path of light that has passed through the synchronous lens 52. A current-voltage converter 53 converts an electrical signal (output current) output from the synchronous detection PS 54 into a voltage signal. The signal amplifier 55 including, for example, an operational amplifier, amplifies the voltage signal output from the current-voltage converter 53. The binarizing circuit 56 including, for example, a comparator binarizes the voltage signal amplified by the signal amplifier 55 based on a threshold voltage, and outputs a high-level signal as the synchronous signal to the control system 46 while the voltage signal exceeds the threshold voltage. The light detector is also referred to as a photodetector or a light receiving element.

Instead of the binarizing circuit 56, for example, an A/D converter may be provided.

Specifically, the reflecting mirror 24 is disposed upstream from the range of deflection in the direction of rotation of the rotating mirror 26. The light deflected by the rotating mirror 26 in a direction upstream from the range of deflection strikes the reflecting mirror 24. Then, the light deflected by the rotating mirror 26 and reflected by the reflecting mirror 24 passes through the synchronous lens 52 and strikes the synchronous detection PS 54.

Note that, in some embodiments, the reflecting mirror 24 may be disposed downstream from the range of deflection in the direction of rotation of the rotating mirror 26. Further, the synchronous system 50 may be disposed in the optical path in which light is deflected by the rotating mirror 26 and reflected by the reflecting mirror 24.

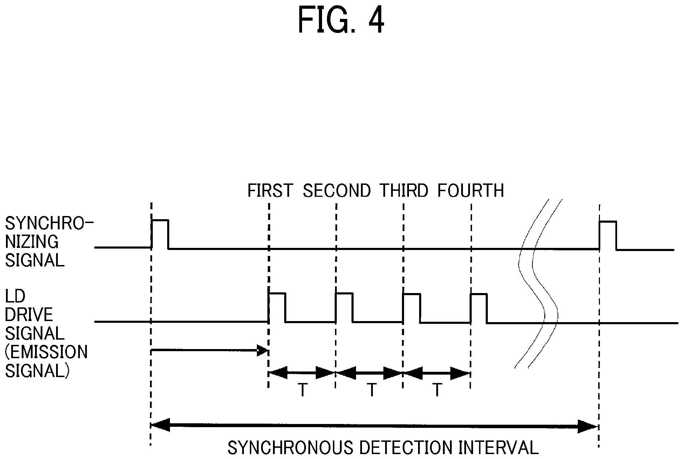

The synchronous detection PS 54 outputs an electrical signal (current) upon receiving light reflected by the reflecting surface of the rotating mirror 26. As a result, the binarizing circuit 56 periodically outputs the synchronous signal (see FIG. 4).

The light emission for synchronization described above, which irradiates the synchronous detection PS 54 with light deflected by the rotating mirror 26, enables the timing of rotation of the rotating mirror 26 to be obtained based on the timing at which the synchronous detection PS 54 receives light.

With a predetermined time elapsed after the light source 11 emits light for synchronization, the light source 11 emits pulsed light so as to scan the effective scanning area. In other words, the effective scanning area can be optically scanned by the light source 11 emitting pulsed light before or after the timing at which the synchronous detection PS 54 receives light.

Further, the binarizing circuit 56 generates a synchronizing signal with the same period as the period of rotation of the rotating mirror 26, and the control system 46 generates an LD drive signal for each synchronizing signal. Accordingly, the effective scanning area can be optically scanned repeatedly.

The synchronous system 50 may not have a synchronous lens, or may have another optical element (for example, a condenser mirror).

In this case, examples of the light receiver of the light detector for time measurement and synchronous detection include a photo diode (PD) as described above, an avalanche photodiode (APD), and a single photon avalanche diode (SPAD) as a Geiger mode APD. The APD and the SPAD have higher sensitivity than a PD does, and thus is advantageous in accuracy of detection or the detection distance.

The control system 46 generates an LD drive signal based on the synchronization signal from the binarization circuit 56 and outputs the LD drive signal to the LD drive section 12.

That is, the LD drive signal is a light emitting signal delayed with reference to the synchronizing signal (a trigger signal for causing the LD to emit light) (see FIG. 4).

Upon receiving the LD drive signal, the LD drive section 12 supplies a drive current to the LD, and the LD emits pulsed light. In this case, the duty of the pulsed light emitted from the LD is restricted in consideration for the safety and durability of the LD. This is why the pulse width of the pulsed light emitted from the LD is preferably narrower. The pulse width is generally set in a range from approximately 10 ns through approximately several dozen ns. The pulse interval is approximately several dozen microseconds in general.

The control system 46 measures the distance to a target (an object to be measured) based on the LD drive signal and the signal output from the digital signal output circuit 44, and outputs the measurement result as distance data to the object recognition section 47.

The object recognition section 47 recognizes, for example, the position, shape, and size of the object based on a plurality of sets of distance data acquired from the control system 46 through one scan or a plurality of scans. The control system 46 transmits the object recognition result to the ECU.

The object recognition section 47 is implemented by, for example, a central processing unit (CPU) or an integrated circuit (IC).

The ECU performs, for example, steering control (for example, auto steering), speed control (for example, auto brake, auto accelerator, etc.) of a car, warning for appealing to the driver and the auditory sense, etc. based on the transferred object recognition result.

Note that at least one of the control system 46 and the object recognition section 47 may not be provided, and the ECU may have at least one capability of those of the control system 46 and the object recognition section 47.

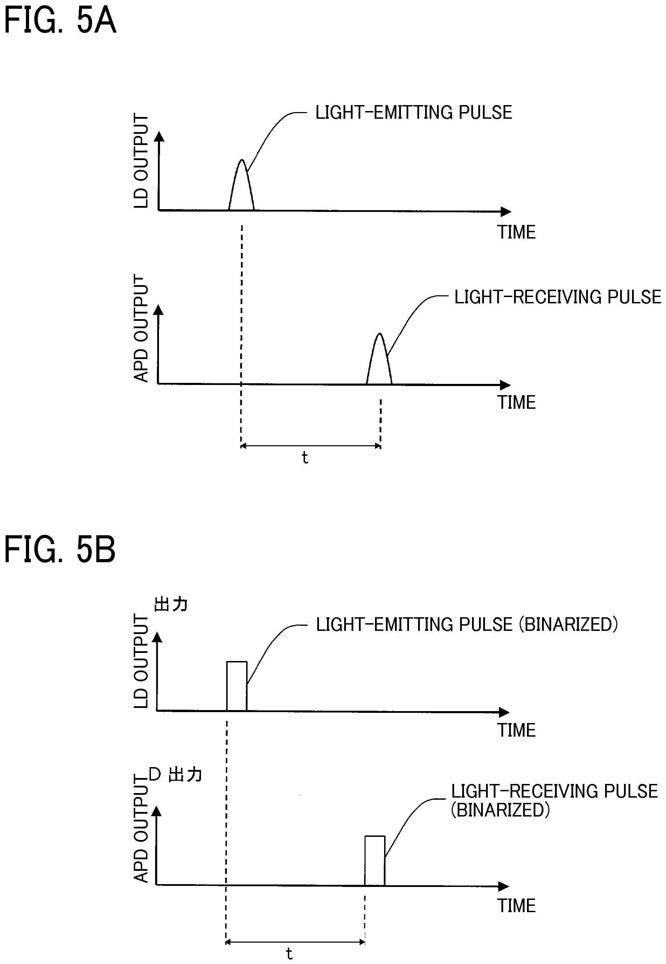

In the present embodiment, when the rotating mirror 26 scans the effective scan area, the LD drive section 12 drives the LD (the light source 11) to emit pulsed light (hereinafter, referred to as light-emitting pulse or projection pulse) as illustrated in FIG. 5A. Subsequently, the pulsed light (hereinafter, referred to also as light-receiving pulse) emitted from the LD and reflected (scattered) by the object strikes the time measurement PS 42 (the APD is used as the light receiving element (photosensor) in FIG. 5A, instead of the PD).

The time t from when the LD emits light-emitting pulse to when the APD receives the light-receiving pulse is measured so as to obtain the distance to the object. The following describes how to measure the time t. As illustrated in FIG. 5B for example, the light-emitting pulse is received by the photosensor such as a PD and photoelectrically converted into an electrical signal, and the electrical signal is converted into a voltage signal through current-voltage conversion (the voltage signal is further amplified as needed). The voltage signal is binarized to obtain a rectangular pulse. and photoelectrically converted into an electrical signal, and the electrical signal is converted into a voltage signal through current-voltage conversion (the voltage signal is further amplified as needed). The voltage signal (a received-light signal) is binarized to obtain a rectangular pulse. The control system 46 measures the difference in the rising edge between the rectangular pulses to obtain the time t. Alternatively, the control system 46 may convert analog data of waveforms of the light-emitting pulse and the light-receiving pulse into digital data through the A/D conversion so as to obtain the time t.

In case in which a comparator is used in the digital signal output circuit 44 to detect object information, it is determined that an object exists when an output of the comparator is high, and an object does not exist when an output of the comparator is low.

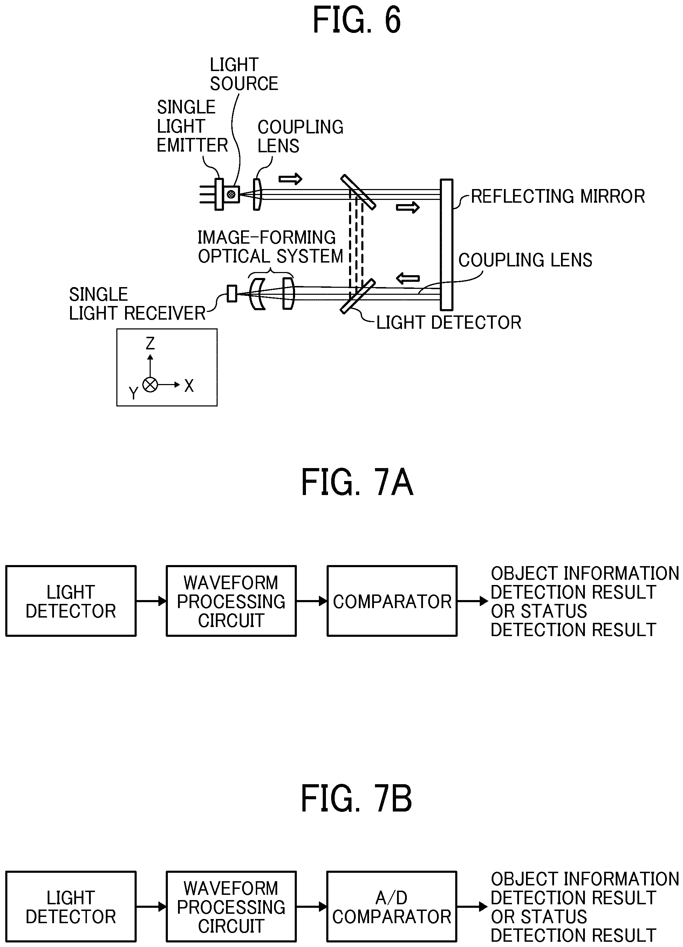

For example, an object detector according to comparative example 1 as illustrated in FIG. 6 includes a light source provided with one light emitter and a light detector provided with one light receiver. In such an object detector according to comparative example 1, it is determined that either one of the light emitter and the light receiver is out of order (operational failure occurs) when a comparator, which is connected to the light detector via a waveform processing circuit, outputs a low-level signal.

FIGs. 7A and 7B are illustrations of an example configuration 1 and an example configuration 2 of the light detection system of the object detector 100. In FIG. 7A, a comparator is used as a digital signal output circuit that processes an output signal (an analog voltage signal) of the waveform processing circuit and outputs a digital signal. In FIG. 7B, an A/D converter is used as such a digital signal output circuit.

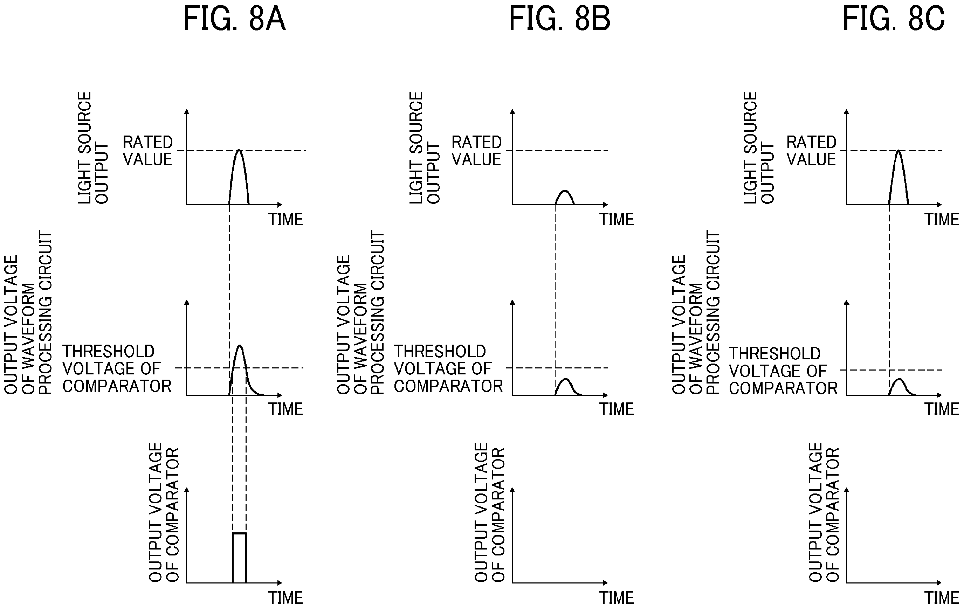

The following describes the operation failure of the light emitter and the light receiver when the comparator is used as the digital signal output circuit 44 as illustrated in FIG. 7A, referring to FIGs. 8A, 8B, and 8C.

When the light emitter and the light receiver operate properly (normally) (no operational failure occurs in the light emitter and the light receiver) as illustrated in FIG. 8A, the peak of pulsed light emitted from the light emitter reaches a rated value and the peak of an output voltage of the waveform processing circuit exceeds a threshold voltage of the comparator. As a result, the output voltage of the comparator becomes high.

When the light emitter is out of order (operational failure occurs in the light emitter) as illustrated in FIG. 8B, the peak of the pulsed light emitted from the light emitter falls below the rated value and the peak of the output voltage of the waveform processing circuit 44 does not exceed the threshold voltage of the comparator. As a result, the output voltage of the comparator becomes low.

When the light emitter operates properly (normally) (no operational failure occurs in the light emitter) and the light receiver is out of order as illustrated in FIG. 8C, the peak of the pulsed light emitted from the light emitter reaches the rated value and the peak of the output value of the waveform processing circuit does not exceeds the threshold voltage of the comparator. As a result, the output voltage of the comparator becomes low.

Next, a description is given of the operational failure of the light emitter and light receiver when an A/D converter is used as the digital signal output circuit 44 as illustrated in FIG. 7B.

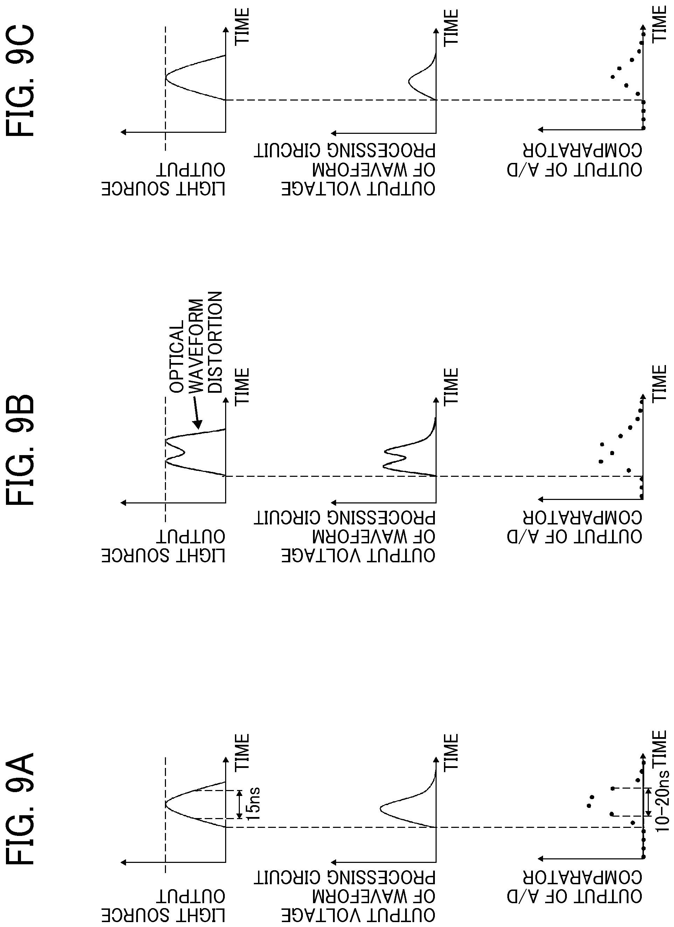

As illustrated in FIG. 9A, when the light emitter operates properly (no operational failure occurs), the pulse width of the pulsed light of the normal waveform output from the light emitter becomes 15 nanosecond (ns). Further, when the light receiver operates properly, the pulse width of the pulsed light of the waveform output from the A/D converter become 10 to 20 ns and the peak of the output value is a predetermined value or less.

When the waveform of the pulsed light (hereinafter, referred to as emitted light) output from the light emitter is of a distorted shape (an abnormal shape) as illustrated in FIG. 9B, it is determined that the light emitter is out of order. That is, the failure of the light emitter can be detected based on the waveform output from the A/D converter.

When the light emitter operates properly (normally) such that the output waveform of the light emitter is of a normal shape, but the light-receptive sensitivity of the light receiver becomes too small as illustrated in FIG. 9C, it is determined (detected) that the light receiver is out of order based on the output waveform of the A/D converter.

When the A/D converter is used, the distorted-shaped waveform of the emitted light can be detected with high accuracy, which can increase the accuracy of detection of the operational failure.

In the present disclosure, the light-receptive sensitivity refers to the sensitivity (unit is amperes per watt (A/W)) of the light receiver such as a PD and an APD and also refers to the sensitivity (volt per watt (V/W)) that includes gain of a component such as the waveform processing circuit 44 in a subsequent stage of the light receiver.

That is, in the present disclosure, the light-receptive sensitivity broadly means light-receptive sensitivity of the light detection system.

Any of the above-described operational failures is to be detected over the following concerns: a maximum detection distance might decrease with an excessive decrease in the amount of light emission of the light emitter and the light-receptive sensitivity of the light receiver; safety might be impaired with an excessive increase in amount of light emission of the light emitter; noise might increase, and ghost might be generated with an excessive increase in light-receptive sensitivity; and the object information detection might fail (for example, the accuracy of ranging might decrease) due to the distortion of the waveform of light emitted from the light emitter.

However, the object detector according to comparative example 1 in FIG. 6 provided with one light emitter and one light receiver fails to identify which of the light emitter and the light receiver is out of order. Accordingly, an appropriate measurement to correct the caused failure (due to either one of the light emitter and the light receiver) is unable to be selected from, for example, increasing/decreasing amount of light emission, increasing/decreasing light-receptive sensitivity, and stopping the system by issuing an alarm.

In some cases, the light source 11 includes a plurality of light emitters or the light detector includes a plurality of light receivers. In such a case, a detection field that is an area of the light detector on which light reflected or scattered from a target might strike can be divided for detection.

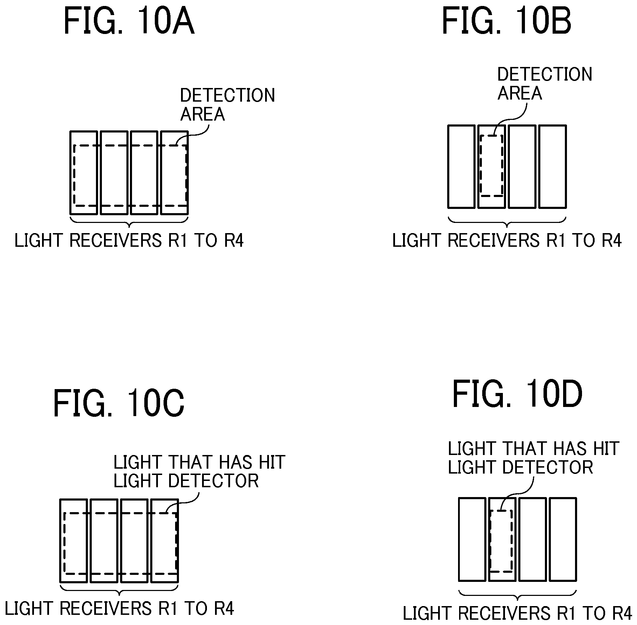

FIGs. 10A and 10B are illustrations of the relations between the light receivers R1 to R4 and the detection field of the light reflected or scattered from a target after passing through the optical path for detecting the object information in detecting object information according to cases 1 and 2, respectively.

FIGs. 10C and 10D are illustrations of the relations between the light receivers R1 to R4 and light striking on the light detector according to the above-described cases 1 and 2, respectively.

In FIGs. 10A, 10B, 10C, and 10D, four rectangular areas indicated by solid line refer to the light receivers R1 to R4 of the light detector, respectively, and a rectangular area indicated by broken line refers to the detection field.

In FIGs. 10A, 10B, 10C, and 10D, the light receivers R1 to R4 are arranged in that order from left to right when viewing a sheet on which FIGs. 10A, 10B, 10C, and 10D are drawn. In FIGs. 10A, 10B, 10C, and 10D, the light receivers R1 to R4 are arranged, for example, in the Y-axis direction (horizontal direction).

In the present embodiment, a comparator as the waveform processing circuit and the digital signal processing circuit is provided for each light receiver.

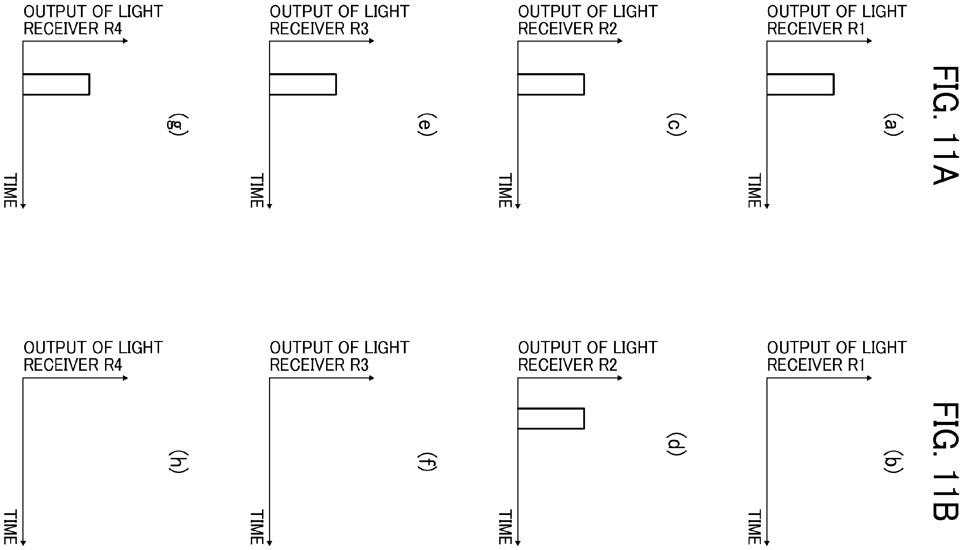

As can be seen from FIGs. 10A and 10C for case 1, light strikes the detection field that corresponds to all the light receivers R1 to R4 so that all the light receivers R1 to R4 output signals (light receiving signals) (see FIG. 11A((a), (c), (e), and (g)).

In case 2, as can be seen from FIGs. 10B and 10D, light strikes the detection field that corresponds only to one light receiver (light receiver R2 in FIGs. 10B and 10D) so that only the light receiver R2 outputs a signal (a light receiving signal) (see FIG. 11B (b), (d), (f), and (h)).

In actuality, the waveform of the output signal of the light receiver is an analog waveform, but the output waveform is represented as a digital waveform in FIGs. 11A and 11B for the sake of convenience.

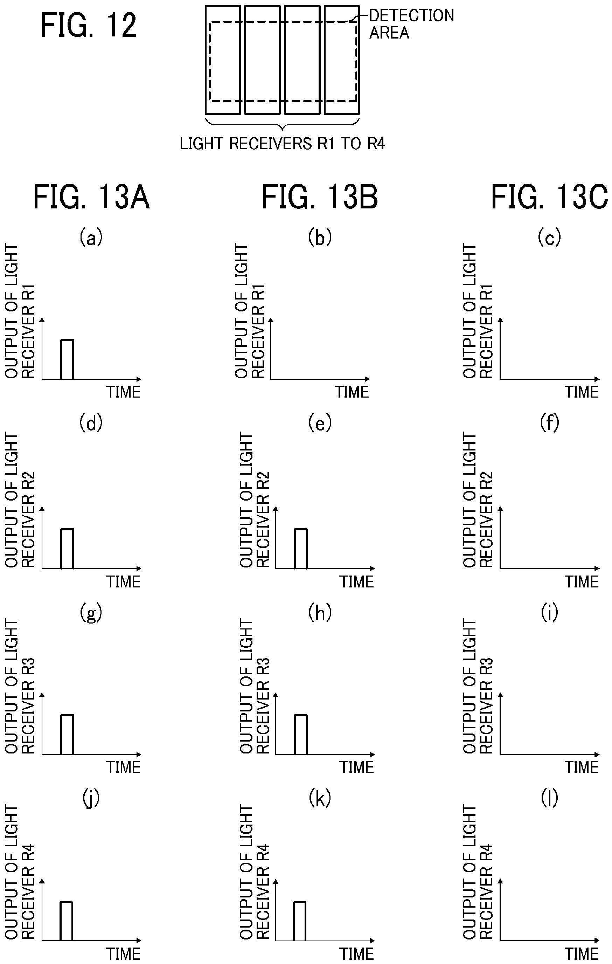

FIG. 12 is an illustration for explaining the relation of the light detector and the light (illumination area) that has been emitted from one light emitter, passed through the optical path for detecting the conditions, and struck on four light receivers of the light detector in detecting the conditions of the light emitter and the light receivers (hereinafter, also referred to simply as "in detecting the conditions"). In FIG. 12, four rectangular areas indicated by solid line refer to the light receivers R1 to R4 of the light detector, respectively, and a rectangular area indicated by broken line refers to the detection field. In FIG. 12, the light receivers R1 to R4 are arranged, for example, in the Y-axis direction (horizontal direction).

In FIG. 12, the illumination area corresponds to all of the light receivers R1 to R4 so that all of the light receivers R1 to R4 output signals (light receiving signals).

FIGs. 13A((a), (d), (g), (j)), 13B((b), (e), (h), and (k)), and 13C ((c), (f), (i), and (l)) are illustrations of operation examples of the light receivers R1 to R4 in detecting the conditions of the light emitter and the light receivers under the relation of FIG. 12.

When the light emitter and the light receivers R1 to R4 operate normally as illustrated in FIG. 13A((a), (d), (g), (j)), the light receivers R1 to R4 output signals properly (hereinafter, referred to also as "output a normal signal") in response to light emission of the light emitter.

When only the light receiver R1 is out of order and the light-receptive sensitivity is 0 as illustrated in FIG. 13B((b), (e), (h), and (k)), the light receiver R1 fails to output a signal whereas the light receivers R2 to R4 output signals properly (normal signals) in response to light emission of the light emitter.

When the light emitter is out of order and the amount of light emission is 0 as illustrated in FIG. 13C((c), (f), (i), and (l)), the light emitter fails to emit light so that any of the light receivers fails to receive light. Thus, the light receivers R1 to R4 fail to output signals.

In other words, when all of the light receivers fail to output normal signals, it is determined that the light emitter is out of order. When only a specific light receiver fails to output a signal or outputs an abnormal signal, it is determined that the same light receiver is out of order.

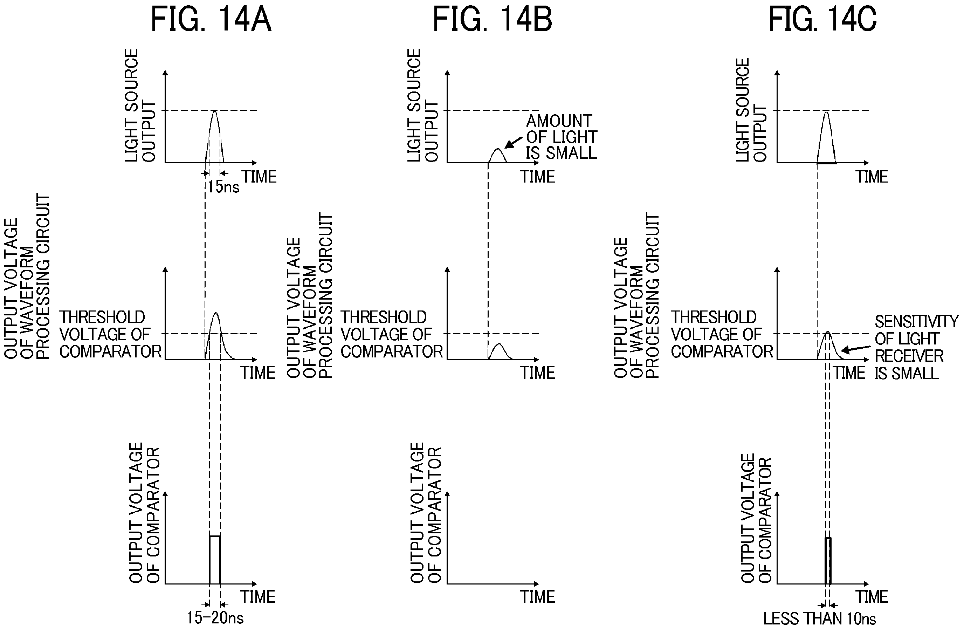

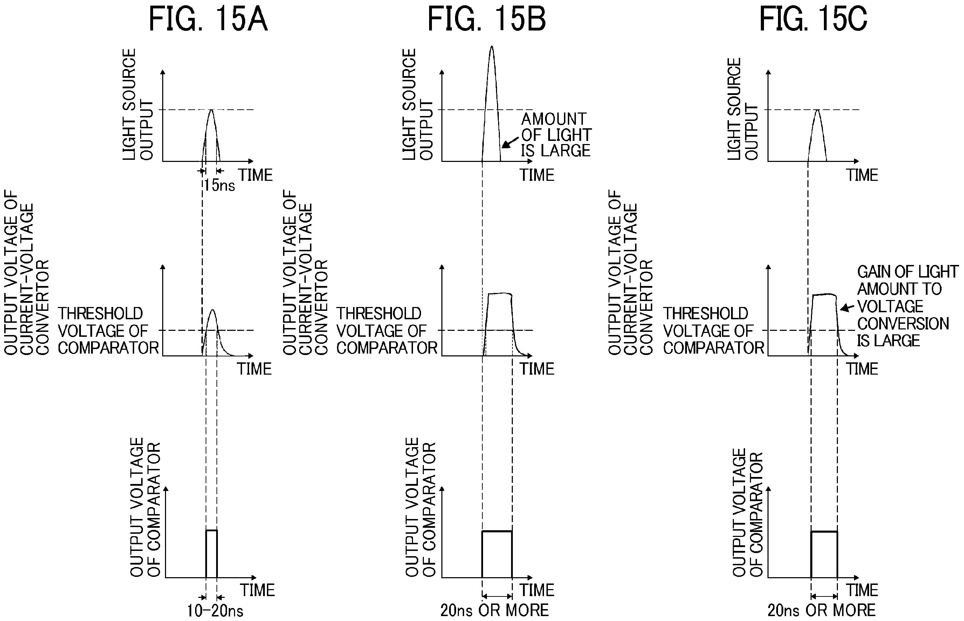

FIGs. 14A and 15A are illustrations of an operation example 1 (a first method of detecting the conditions) and an operation example 2 (a second method of detecting the conditions), respectively of the comparator of the light detection system according to the configuration in FIG. 7A. As illustrated in FIGs. 14A and 15A, when the light emitter and the light receiver operate properly, the comparator is set to the threshold value such that the pulse width of the pulsed light output from the light emitter is 15 ns and the pulse width of voltage output from the comparator ranges from 10 to 20 ns.

However, even if the light-receptive sensitivity of the light receiver is at the normal value indicated (the light receiver operates properly (normally)), the peak of the output voltage of the waveform processing circuit fails to exceed the threshold voltage and the output voltage of the comparator becomes zero when the amount of light emission of the light emitter is too small or zero as illustrated in FIG. 14B. That is, it is determined from the output voltage of the waveform processing circuit and the comparator that the amount of light emission of the light emitter is less than the normal value indicated by dotted line in FIG. 14B (the light emitter is not operating properly).

Further, as illustrated in FIG. 14C, even if the amount of light emission of the light emitter is at a normal value indicated by dotted line in FIG. 14C (the light emitter operates properly (normally)), the peak of the output voltage of the waveform processing circuit slightly exceeds the threshold voltage and the pulse width of the output voltage of the comparator is less than 10 ns when the light-receptive sensitivity of the light receiver is too small or zero. That is, it is determine from the output of the waveform processing circuit and the comparator that the light-receptive sensitivity of the light receiver is less than the normal value (the light receiver is not operating properly).

Further, as illustrated in FIG. 15B, even if the light-receptive sensitivity of the light receiver is at the normal value, the pulse width of output voltage of each of the current-voltage converter and the comparator becomes too large when the amount of light emission of the light emitter is too large. That is, it is determined that the amount of light emission of the light emitter is much larger than the normal value indicated by the dotted line in FIG. 15B.

Further, as illustrated in FIG. 15C, even if the amount of light emission of the light emitter is at the normal value (indicated by dotted line in FIG. 15C), the gain (gain of the light amount to voltage conversion) between the light receiver and the current-voltage converter (gain obtained by converting the light amount into voltage) becomes too large and the pulse width of the output voltage of the comparator also becomes too large when the light-receptive sensitivity of the light receiver is too large. That is, it is determined that the light-receptive sensitivity of the light receiver is much larger than the normal value.

The output voltage of the current-voltage converter has such a waveform with a large pulse width as illustrated in FIGs. 15B and 15C depending on the circuit characteristics (for example, the characteristics of an operational amplifier) of the light receiver and the current-voltage converter.

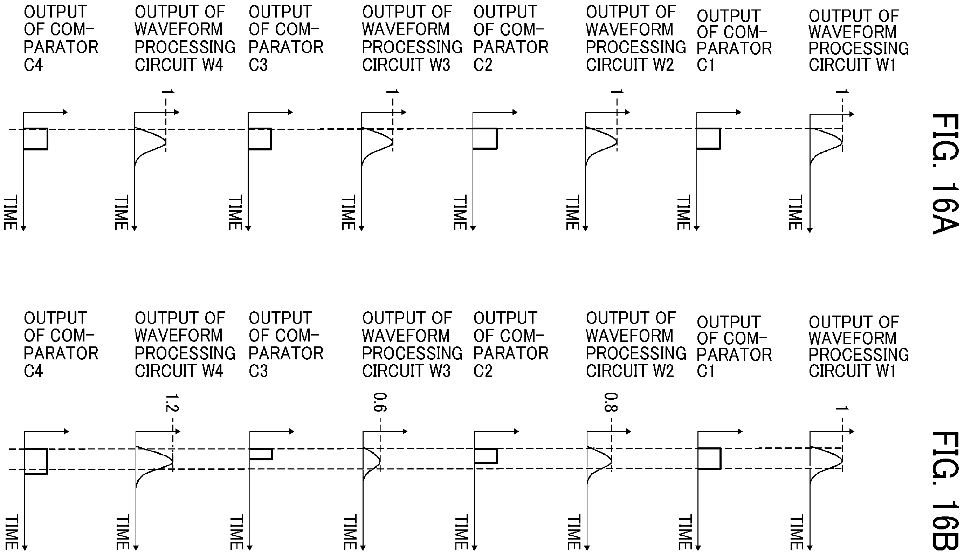

The following describes an operational example when all of the light receivers R1 to R4 receive light emitted from the light emitter as illustrated in FIG. 12 in the configuration of the light detection system in FIG. 7A, referring to FIGs. 16A and 16B. FIG. 16A is an illustration for explaining the case in which both the light emitter and the light receiver operate properly (normally), and each of the light receiver R1 to R4 has the same light-receptive sensitivity and receives the same amount of light.

As illustrated in FIG. 16A in which both the light emitter and the light receiver operate normally, the output voltages of the waveform processing circuits W1 to W4 corresponding to the light receivers R1 to R4, respectively are equal to each other, and the output voltages of the comparators C1 to C4 corresponding to the waveform processing circuit W1 to W4, respectively are equal to each other.

FIG. 16B is an illustration for explaining the case in which the light emitter operates normally and the light-receptive sensitivity varies between the light receivers R1 to R4. The difference in output voltage (output signal) between the waveform processing circuits W1 to W4 corresponding to the light receivers R1 to R4 depends on the operational conditions of the light receivers R1 to R4 because the light receivers R1 to R4 receive light emitted from the same light emitter. The variation in light-receptive sensitivity between the light receivers R1 to R4 can be detected by comparing the output signals of the waveform processing circuits W1 to W4.

For example, when an APD is used for each light receiver, the multiplication factor greatly varies with temperature, that is, the light-receptive sensitivity of the light receiver greatly varies with temperature. Accordingly, the difference in light-receptive sensitivity between the light receivers is detected to obtain a satisfactory system performance. Specifically, the APD is controlled based on the detection result so as to obtain the system performance such as the ranging accuracy.

Similarly, when the A/D converter is used as the digital signal output circuit instead of the comparator as illustrated in FIG. 7B, the conditions of the light emitter and the light receivers can be detected.

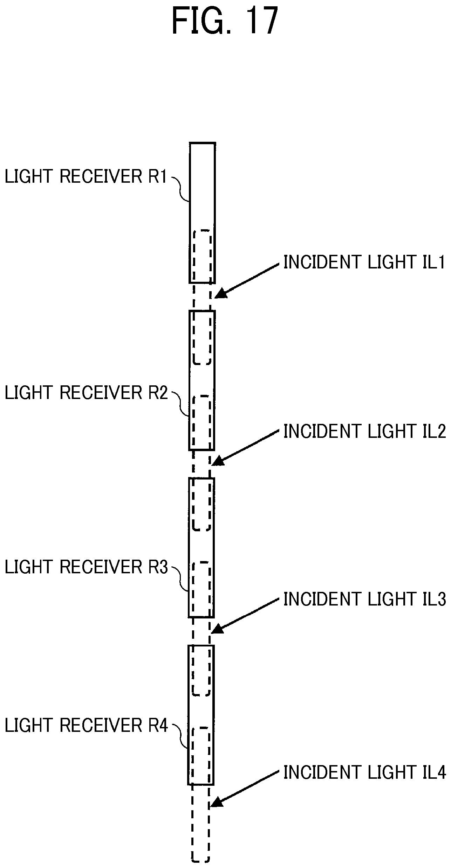

FIG. 17 is an illustration of the relation between the light receivers R1 to R4 of the light detector and the light (incident light IL1 to IL4 to be received by the light detector) emitted from light emitters E1 to E4 of the light source 11 and striking the light detector including the light receivers R1 to R4 in detecting the conditions of the light emitters and the light receivers, according to the invention as claimed.

In FIG. 17, the light receivers R1 to R4 are arranged, for example, in the Z-axis direction (vertical direction).

The incident light IL1 strikes the light receivers R1 and R2, the incident light IL2 strikes the light receivers R2 and R3, the incident light IL3 strikes the light receivers R3 and R4, and the incident light IL4 strikes the light receiver R4.

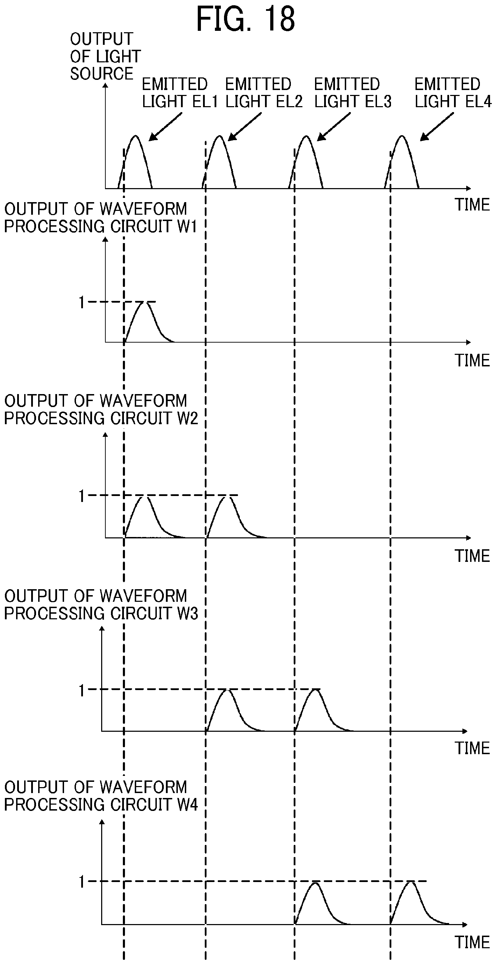

FIG. 18 is an illustration of an operational example of a set of the light source 11 and the waveform processing circuits W1 to W4 when each light emitter and each light receiver operates normally in the example of FIG. 17.

In the present embodiment, waveform processing circuits W1 to W4 are disposed corresponding to the light receivers R1 to R4, respectively. Further, when each light emitter and each light receiver operate normally, the peak amounts of light (emitted light EL1 to emitted light EL4) emitted from the light emitters E1 to E4, that is, the amounts of light emission of the light emitters E1 to E4 are equal to each other. Further, each of the light receivers R1 to R4 has an equal light-receptive sensitivity.

In this configuration, the light emitters E1 to E4 are caused to emit light at different timings, and incident light IL1 to incident light IL4 corresponding to the emitted light EL1 to emitted light EL4 sequentially strike the light detector. In such a case, the waveform processing circuit W1 and W2 output the same signal in response to the simultaneous reception of the incident light IL1 at the light receivers R1 and R2, and the waveform processing circuit W2 and W3 output the same signal in response to the simultaneous reception of the incident light IL2 at the light receivers R2 and R3. Further, the waveform processing circuit W3 and W4 output the same signal in response to the simultaneous reception of the incident light IL3 at the light receivers R3 and R4.

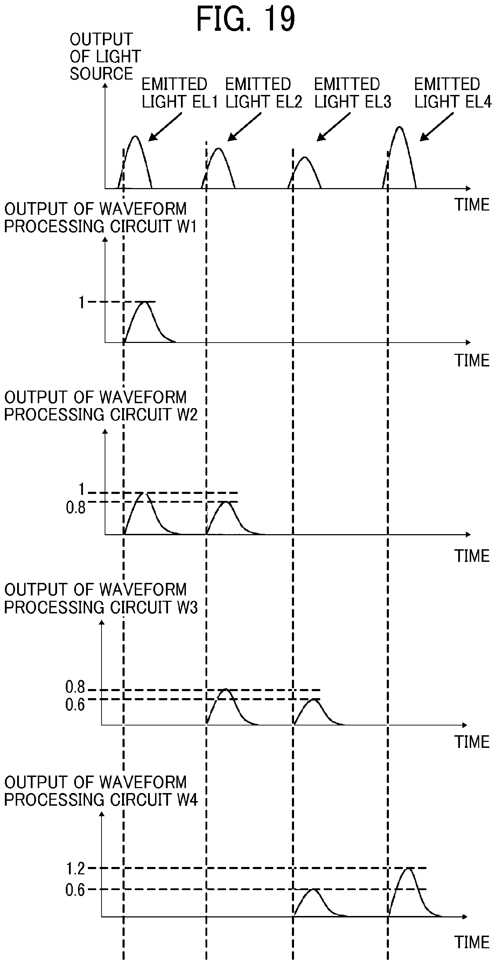

FIG. 19 is an illustration of an operational example of a set of the light source 11 and the waveform processing circuits W1 to W4 when the peak amounts of emitted light EL1 to emitted light EL4 of the light emitters E1 to E4, i.e., the amounts of light emission of the light emitters E1 to E4 vary and each of the light receivers R1 to R4 has an equal light-receptive sensitivity in the example of FIG. 17.

In the present embodiment, waveform processing circuits W1 to W4 are disposed corresponding to the light receivers R1 to R4, respectively.

As can be seen from FIG. 19, the variation in amount of light emission between the light emitters E1 to E4 is directly reflected in the variation in output voltage between the waveform processing circuits W1 to W4. Accordingly, the variation in amount of light emission between the light emitters E1 to E4 can be detected based on the variation in output voltage between the waveform processing circuits W1 to W4.

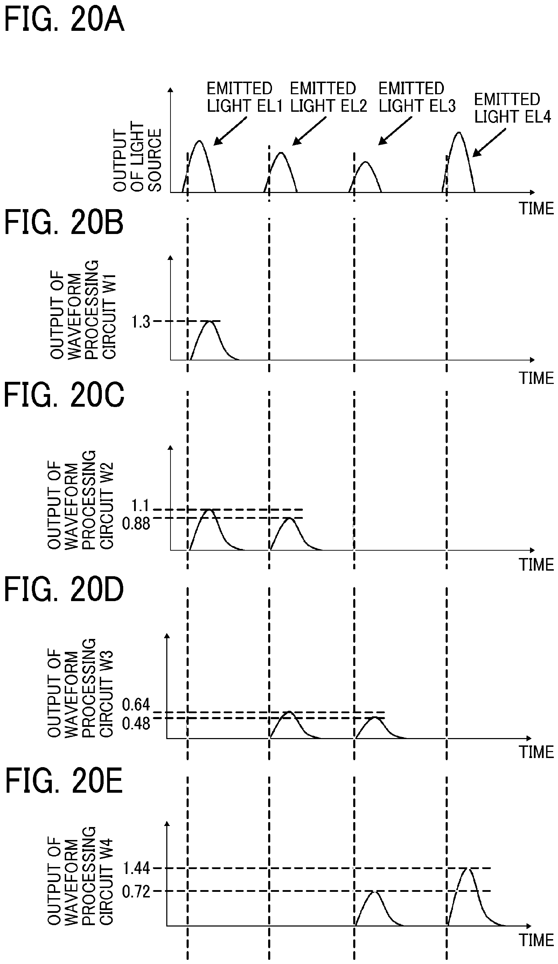

FIGs. 20A to 20E are illustrations of an operational example of the light source 11 and the waveform processing circuits W1 to W4 when the peak amounts of emitted light EL1 to emitted light EL4 of the light emitters E1 to E4, i.e., the amounts of light emission of the light emitters E1 to E4 vary between each other and the light-receptive sensitivity of the light receivers R1 to R4 also vary between each other in the example of FIG. 17.

In the present embodiment, waveform processing circuits W1 to W4 are disposed corresponding to the light receivers R1 to R4, respectively.

FIG. 20A is an illustration of waveforms of the emitted light EL1 to emitted light EL4 emitted from the light emitters E1 to E4.

For example, the ratio in amount of light emission between the light emitters E1 and E2 is obtained from the ratio in the output of the waveform processing circuit W2 (FIG. 20C) between the emitted light EL1 and the emitted light EL2.

For example, the ratio in amount of light emission between the light emitters E2 and E3 is obtained from the ratio in the output of the waveform processing circuit W3 (FIG. 20D) between the emitted light E12 and the emitted light EL3.

For example, the ratio in amount of light emission between the light emitters E3 and E2 is obtained from the ratio in the output of the waveform processing circuit W4 (FIG. 20E) between the emitted light E13 and the emitted light EL4.

As a result, the ratio in amount of light emission between the light emitters E1 to E4 is detected (1 : 0.8 : 0.6 : 1.2 in the case of FIGs. 20A, 20B, 20C, 20D, and 20E).

Note that a significant variation in amount of light emission between the light emitters means a deterioration in the light emitters. Further, when the variation in amount of light emission exceeds a predetermined value (for example, ± 20% relative to a peak value of 100 W that is a typical value), it is determined that the light emitters are under abnormal operating conditions (the light emitters are not operating normally), and the system can be stopped.

For example, the ratio in light-receptive sensitivity between the light receivers R1 and R2 is obtained from the ratio in the output corresponding to the emitted light EL1 between the waveform processing circuit W1 (FIG. 20B) and the waveform processing circuit W2 (FIG. 20C).

For example, the ratio in light-receptive sensitivity between the light receivers R2 and R3 is obtained from the ratio in the output corresponding to the emitted light EL2 between the waveform processing circuit W2 (FIG. 20C) and the waveform processing circuit W3 (FIG. 20D).

For example, the ratio in light-receptive sensitivity between the light receivers R3 and R4 is obtained from the ratio in the output corresponding to the emitted light EL3 between the waveform processing circuit W3 (FIG. 20D) and the waveform processing circuit W4 (FIG. 20E).

As a result, the ratio in the light-receptive sensitivity between the light receivers R1 to R4 is detected (1.3 : 1.1 : 0.8 : 1.2 in the case of FIGs. 20A, 20B, 20C, 20D, and 20E).

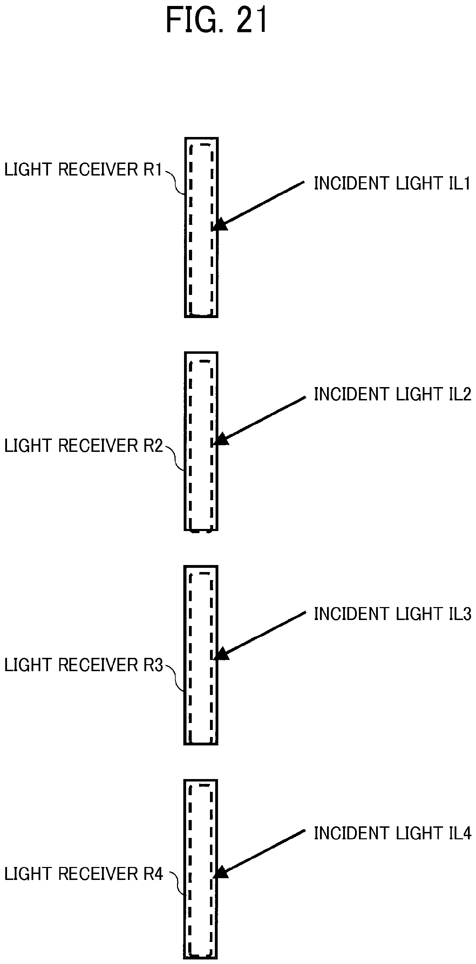

In detecting object information, the relation between the light receivers R1 to R4 and the incident light IL1 to incident light IL4 may not be limited to the relation in FIG. 17 in which each light receiver and an area on which each corresponding incident light strikes are shifted from each other. Alternatively, each light receiver may coincide with the area of the incident light emitted from the corresponding light emitter (the light receivers R1 to R4 receive the incident light IL1 to incident light IL4, respectively) as illustrated in FIG. 21. In order to achieve such a relation, for example, in the configuration of FIG. 2C, the beam splitters 27 and 28 may be arranged in an appropriate orientation. This is because the positional relation between the light receiver and the incident light striking the light receiver in detecting the object information is determined by the layout of the light emitter unit, the coupling lens, the image-forming optical system, and the light detector, whereas the positional relation between the light receiver and the incident light striking the light receiver in detecting the conditions of the light receivers and the light emitters is determined by the layout of the light emitter, the coupling lens, the image-forming optical system, the light detector, the beam splitter 27, and the beam splitter 28. In FIG. 21, the light receivers R1 to R4 are arranged, for example, in the Z-axis direction (vertical direction).

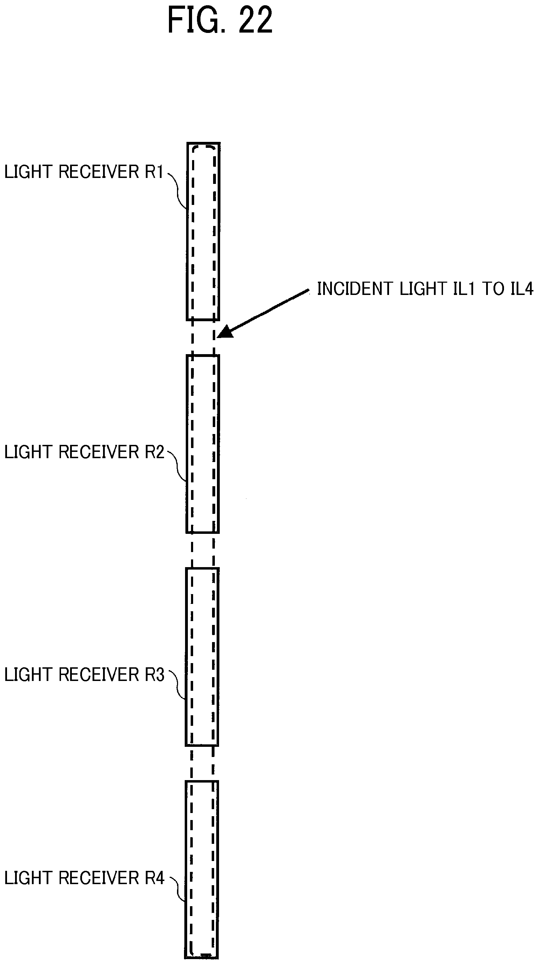

Further, in the example of FIG. 17, light emitted from one light emitter strikes two light receivers. However, for example, the light receivers R1 to R4 receives the incident light IL1 to incident light IL4, respectively in detecting object information as illustrated in FIG. 21. In detecting the conditions of the light emitters and the light receivers as illustrated in FIG. 22, each of the light receivers R1 to R4 receives the light (incident light IL1 to incident light IL4) emitted from the light emitters E1 to E4. In any cases, the same effect can be obtained. In order to achieve the relation as illustrated in FIG. 22 in detecting the condition, for example, the diffusion plate and the convex lens (or concave mirror) may be arranged only in the optical path for detecting the condition. More specifically, in FIG. 2C, the diffusion plate is disposed in the optical path between the beam splitters 27 and 28, and the transmitting/reflecting surface of the beam splitter 28 is made concave, or the convex lens is disposed in the image-forming optical system, so as to achieve the relations between the light receivers and the incident light as illustrated in FIGs. 21 and 22. In FIG. 22, the light receivers R1 to R4 are arranged, for example, in the Z-axis direction (vertical direction).

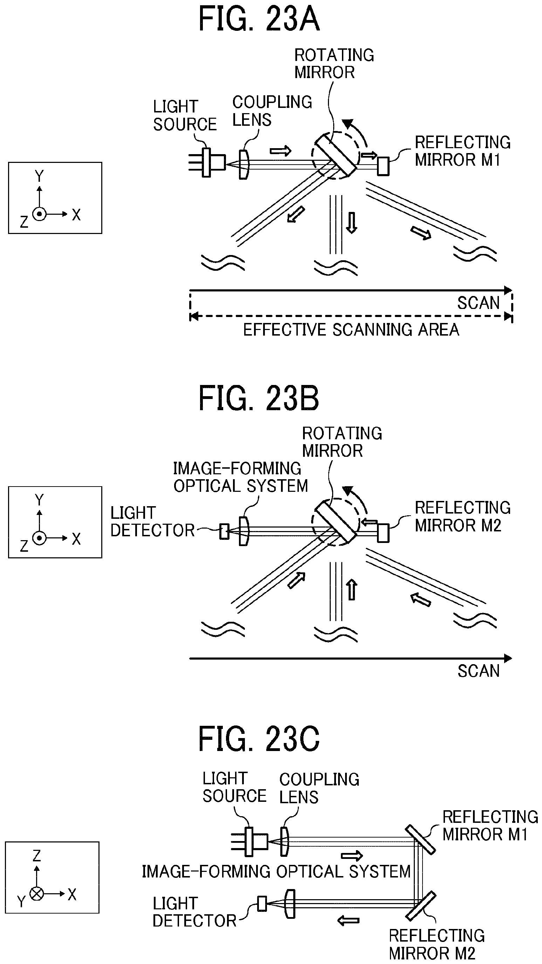

In the object detector provided with the rotating mirror as the light deflector, according to variation 3 of the embodiment in FIG. 2C as illustrated in FIGs. 23A to 23C, an optical path created when the rotating mirror is substantially parallel to the X-axis is used as the second optical path.

More specifically, in variation 3, when the rotating mirror is substantially parallel to the X-axis, light emitted from the light source strikes a reflecting mirror M1 and the light reflected by the reflecting mirror M1 is then reflected by a reflecting mirror M2. The light reflected by the reflecting mirror M2 passes through the image-forming optical system and strikes the light detector.

With such a configuration, the whole effective scanning area created by the rotating mirror can be used as the optical path for detecting object information (the first optical path). Thus, the detection range can be increased. In addition, when multilayer detection is performed with light beams emitted from a plurality of light emitters arranged in the Z-axis direction, light can be guided to the light detector without bending/curving the scan line so that the optical system is simplified.

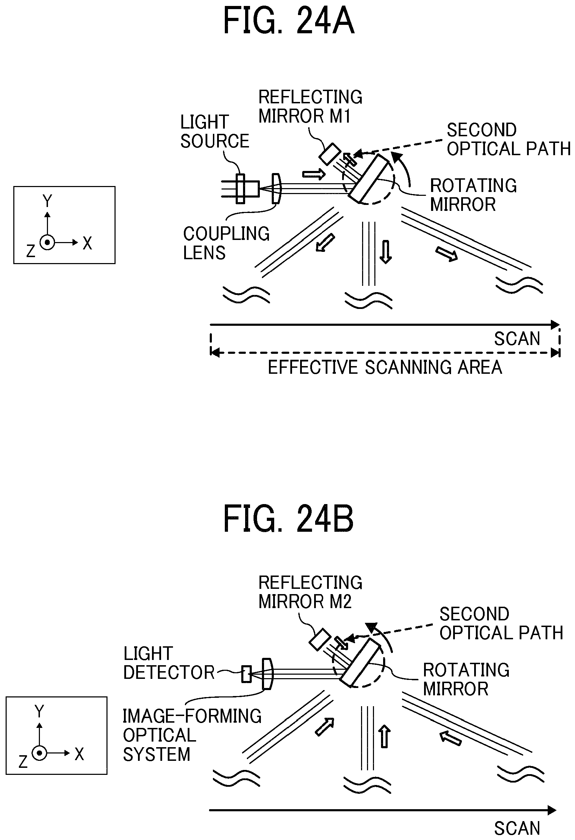

Further, in the object detector according to variation 4 as illustrated in FIGs. 24A and 24B, a rotating mirror is disposed in the second optical path so as to reduce the size of the object detector in the width direction while creating the second optical path.

Note that the waveform processing circuit is not preferably at a level of signal saturation when the light emitters and the light receivers are operating normally so as to detect the conditions of the light emitters and the light receivers as described above. This is because, if the waveform processing circuit reaches the level of signal saturation, the saturation characteristics of the semiconductor device in the waveform processing circuit is contained in information regarding original pulsed light emitted from the light emitters, which results in failure of acquisition of information regarding the peak amount and the waveform of the original pulsed light or accurate information regarding the same.

Further, note that the amount of light emission of the light source is preferably maximized within the range satisfying the laser safety standard, so as to detect a distant object or a low-reflective object. The laser beam sometimes reaches a peak amount of several tens of watts. In such a case, an attenuation optical system, such as a neutral-density (ND) filter, for attenuating light is disposed in the second optical path so as to attenuate the amount of light striking the light detector. Accordingly, the waveform processing circuit is not likely to reach a level of voltage saturation in detecting the conditions of the light emitters and light receivers, which is suitable for detecting the conditions of the light emitters and light receivers.

In FIGs. 23A, 23B, and 23C for example, an attenuation optical system may be disposed in the optical path of light that is reflected by the rotating mirror as the light deflector, reflected by the reflecting mirror M1, and strikes the reflecting mirror M2.

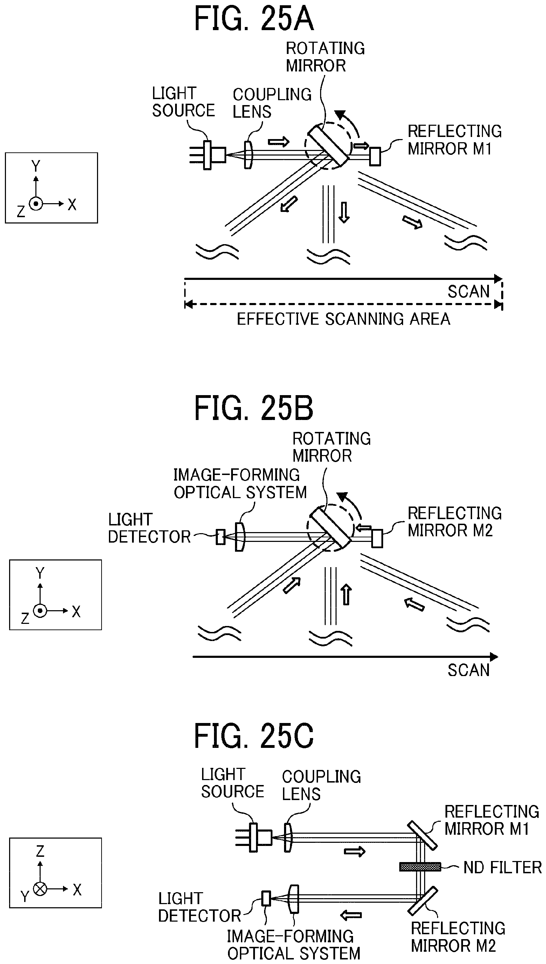

FIGs. 25A, 25B, and 25C are illustrations of an object detector 100 according to variation 5 of an embodiment in which an attenuation optical system is further disposed in the object detector according to variation 3 illustrated in FIGs. 23A, 23B, and 23C. In variation 5, a neutral-density (ND) filter as the attenuation optical system is disposed in the optical path between the reflecting mirror M1 and the reflecting mirror M2.

As described above, the amount of light emission of the light source is preferably increased to detect information regarding a distant object or a low-reflective object. However, the amount of light emission of the light source may be reduced to detect the conditions of the light emitters and the light receivers as compared with the case of detecting the object information, so as to substantially prevent the saturation of the output voltage of the waveform processing circuit, i.e., voltage output to the comparator or the A/D converter of the light detection system in detecting the conditions without any influence on the maximum detection distance.

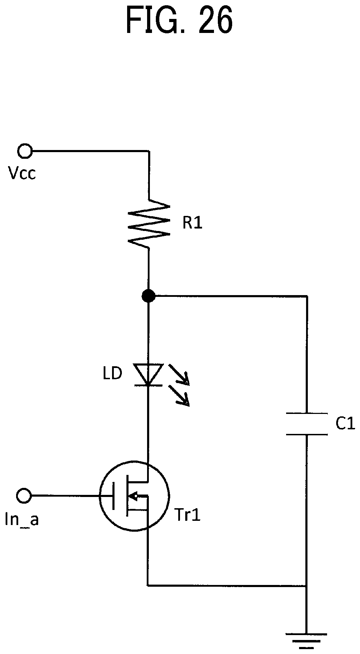

FIG. 26 is an illustration of a configuration example of the LD drive section 12. The values of the elements in FIG. 26 are set, for example, as follows. When the power supply Vcc does not emit light of 50 VR1, 150 ΩC1, and 22 µFLD, the transistor Tr1 is off, during which electrical charge is charged from the power supply Vcc to the capacitor C1. Subsequently, when the transistor Tr1 is turned on (when a signal is applied to the transistor Tr1) to cause the LD to emit light, a significantly large current instantaneously flows to the LD so that the LD emits light, because the resistance component is very small in the path of the current that passes through the capacitor C1 and the LD and goes to the ground. Since the electrical charge charged in the capacitor C1 is finite, the LD ends emitting light when there is no more electrical charge. In such a circuit configuration, the amount of light emission of the light source (the LD) can be reduced in detecting the conditions as compared with the case of detecting the object information by turning on the transistor Tr1 before the charging of the capacitor C1 is completed so as to cause the LD to emit light. In the circuit of FIG. 26, since the time constant of the charging to the capacitor C1 is R1 × C1 = 3.3 ms, the time before the charging of the capacitor C1 is completed is shorter than approximately 3.3 ms.

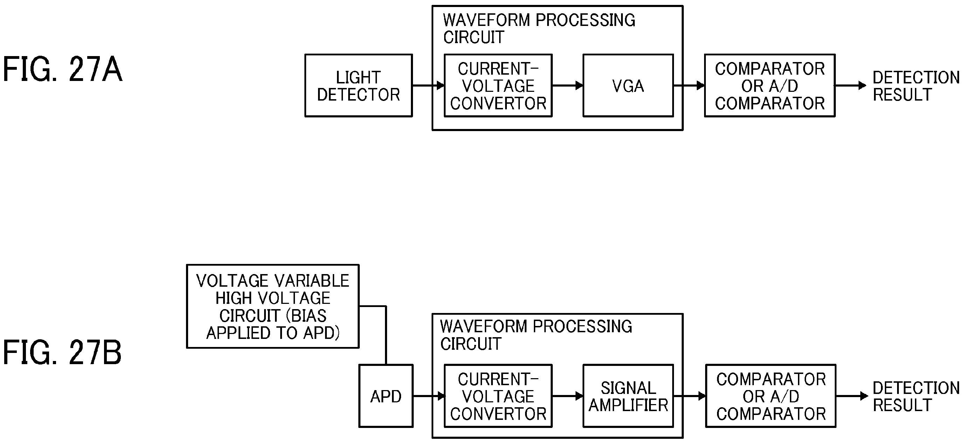

Instead of reducing the amount of light emission of the light source in detecting the conditions, the light-receptive sensitivity of the light receiver may be reduced so as to prevent the voltage saturation in the waveform processing circuit in the same manner. As a method of varying the light-receptive sensitivity, as illustrated in FIG. 27A for example, gain conversion is performed using, for example, a Variable Gain Amplifier (VGA) as a signal amplifier disposed at the subsequent stage of the current-voltage converter. Alternatively, as illustrated in FIG. 27B for another example, an element capable of adjusting the sensitivity under bias voltage control, such as an APD, may be used as the light detector. Alternatively, these methods may be combined together.

In order to maintain the detection performance of the object detector 100, the amount of light emission of the light source 11 or the light-receptive sensitivity of the light detection system is preferably maintained at a predetermined value. Similar advantageous effects can be obtained by bringing the amount of light emission of the light source or the output voltage (analog voltage) of the waveform processing circuit closer to a certain value. The following gives a detailed description.

When P denotes the amount of light received by the light detector and S denotes the light-receptive sensitivity, the voltage V output from the waveform processing circuit is expressed by multiplying S by P (V = S × P). In this case, it is assumed that a comparator is used as the digital signal output circuit, and the threshold voltage of the comparator is set to 150 mV.

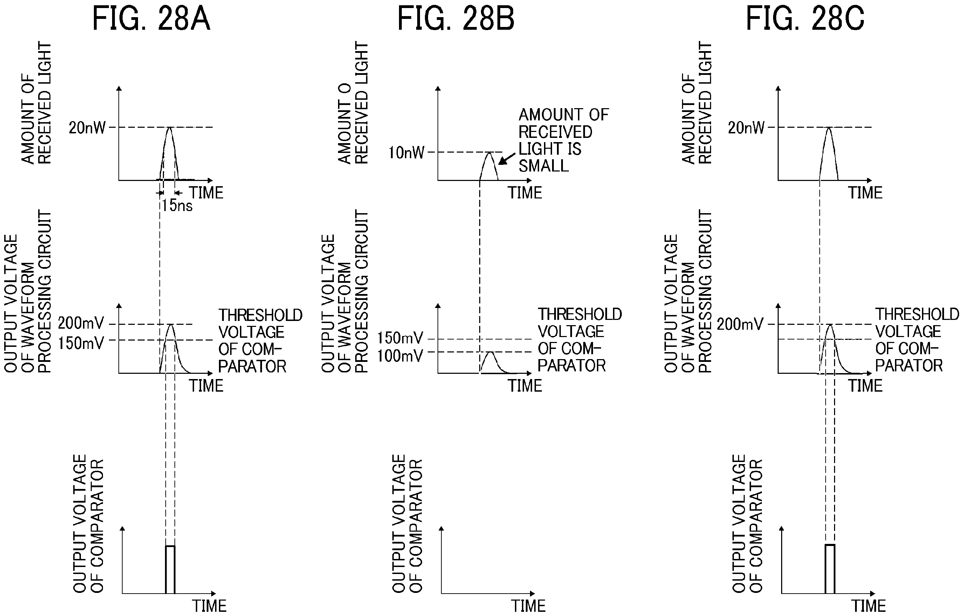

For example, when both the light source system and the light detection system are operating normally, it is assumed that the amount of light returned from the target and received by the light detector is 20 nW and the light-receptive sensitivity of the light detection system is 10 mV/W. Under such conditions, the voltage output from the waveform processing circuit is 200 mV, which can be detected by the comparator (see FIG. 28A).

When the amount of light emitted from the light source decreases and the amount of light returned from the same target and received by the light detector is, for example, 10 nW, the voltage output from the waveform processing circuit becomes 100 mV with the light-receptive sensitivity of the light detection system maintained at the initial value. Such an output voltage cannot be detected by the comparator (see FIG. 28B). To avoid such a situation, the light-receptive sensitivity of the light detection system is adjusted such that the output value of the waveform processing circuit is at a certain value. This adjustment allows for a detection of object information (see FIG. 28C).

In order to monitor the output voltage of the waveform processing circuit, an A/D converter may be used, or the peak value of the output voltage may be estimated by varying the threshold voltage of the comparator as described later.

The configuration in which the comparator is used to detect object information is advantageous from the viewpoint of cost because a costly A/D converter is not used. However, such a configuration merely can tell whether the voltage input to the comparator is higher or lower than a given value, and accordingly fails to detect the accurate values of the light-receptive sensitivity and the amount of light emission.

Further, the threshold voltage is typically minimized as much as possible to detect light reflected or scattered from a distant object or a low-reflective object (to the level at which erroneous detection due to noise does not occur, for example, 150 mV). For such a reason, if the threshold voltage is stationary, abnormality (operational failure) is detected only when the light-receptive sensitivity is significantly lower than the normal value.

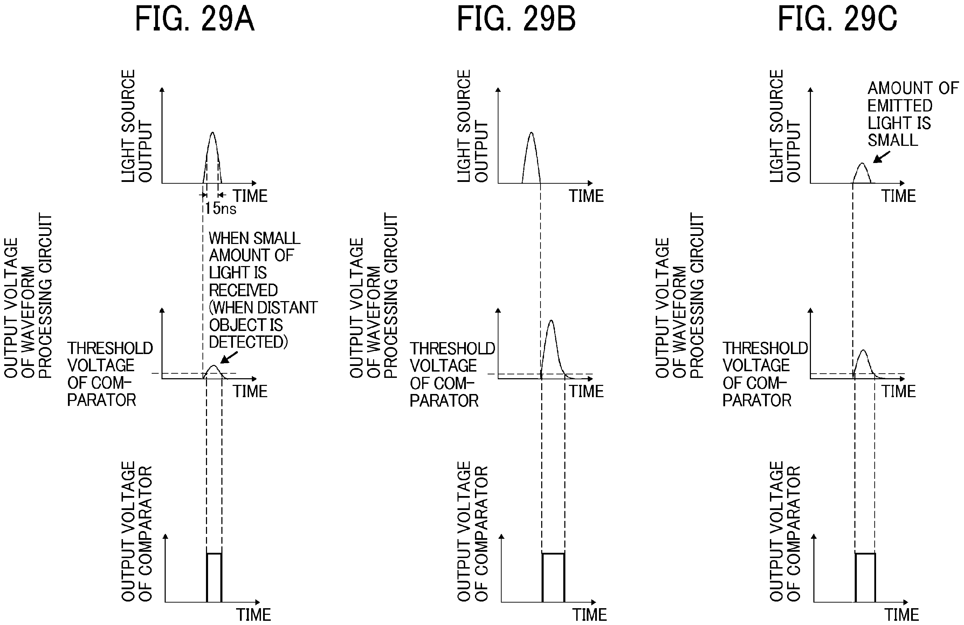

A detailed description is given with reference to FIGs. 29A, 29B, and 29C. FIG. 29A is an illustration of operational examples of the light source, the waveform processing circuit, and the comparator when the amount of light returned from a target is small in detecting object information. FIG. 29B is an illustration of operational examples of the light source, the waveform processing circuit, and the comparator in detecting the conditions of the light source and the light detection system when the light source and the light detection system are operating normally. FIG. 29C is an illustration of operational examples of the light source, the waveform processing circuit, and the comparator in detecting the conditions of the light source and the light detection system when the amount of light emission of the light source decreases.

As illustrated in FIG. 29C, if the threshold voltage in detecting the conditions is set to the same level as in detecting object information, the detection accuracy decreases when the amount of light emission of the light source or the light-receptive sensitivity of the light detection system is low.

In view of the above circumstances, the threshold voltage of the comparator is set to a variable value in performing measurement, so as to accurately detect a reduction in the amount of light emission of the light source or a reduction in the light-receptive sensitivity of the light detection system. The threshold voltage of the comparator is varied by, for example, the control system 46.

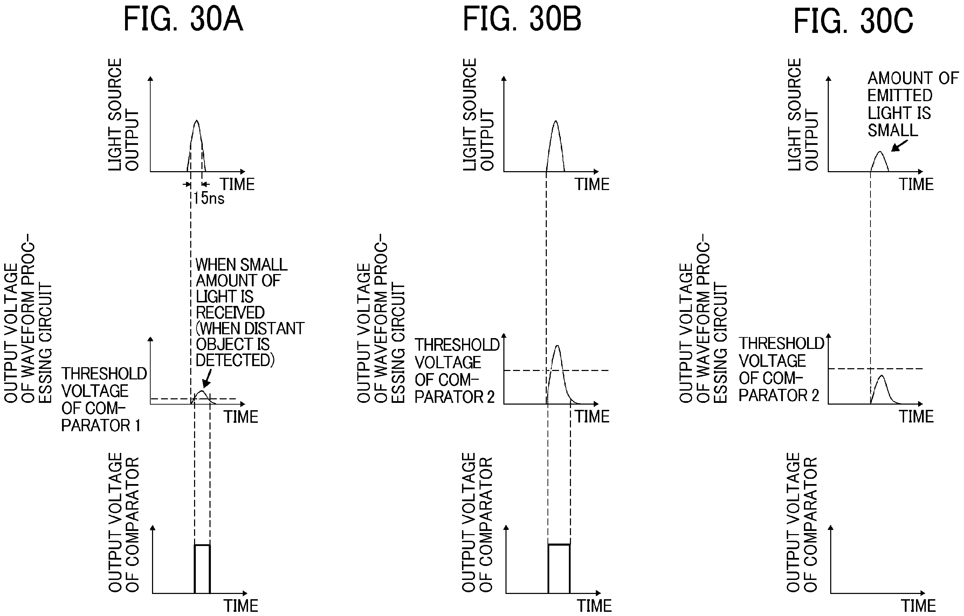

For example, as illustrated in FIGs. 30A, 30B, and 30C, the threshold voltage of the comparator may differ between when detecting the object information and when detecting the states.

For example, by setting the threshold voltage to a low value (threshold voltage V1) in detecting object information, even if the amount of light returned from the target is low, the comparator can detect the output voltage of the waveform processing circuit (see FIG. 30A)) so that information regarding distant objects and low-reflective objects can also be detected.

Further, by setting the threshold voltage to a high value (threshold voltage V2 is greater than the threshold voltage V1) in detecting the conditions, when the light source operates normally, the comparator can detect the output voltage of the waveform processing circuit without reaching the level of saturation (see FIG. 30B), and thus the light-receptive sensitivity of the light detection system is detectable.

However, if the threshold voltage is maintained at a constant value (the threshold voltage V2), when the amount of light emission of the light source decreases, the comparator fails to detect the output voltage of the waveform processing circuit (see FIG. 30C). Thus, a reduction in the amount of light emission of the light source is no longer detectable.

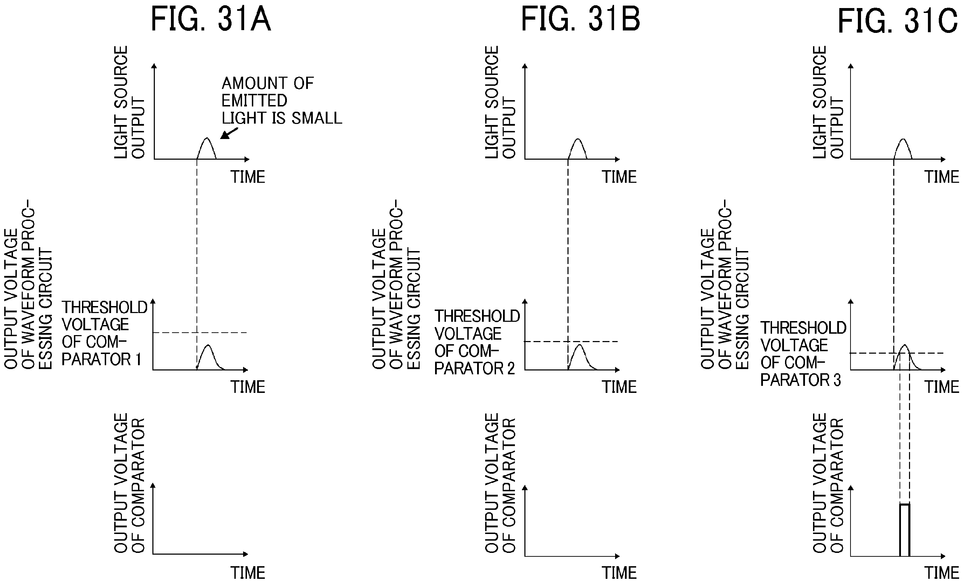

To avoid such a situation, the conditions of the light source and the light detection system are detected plural times with different threshold values of the comparator. Accordingly, a reduction in the amount of light emission of the light source and a reduction in the light-receptive sensitivity of the light detection system are detectable. A detailed description is given with reference to FIGs. 31A, 31B, and 31C.

In FIG. 31A, the threshold voltage V1 is a boundary to determine whether the object detector 100 maintains sufficient detection performance under outdoor environments.

In FIG. 31B, the threshold voltage V2 is a boundary to determine whether the detection performance of the object detector 100 decreases under outdoor environments but is sufficient for object detection under indoor environments.

In FIG. 31C, the threshold voltage V3 is a boundary to determine whether the detection performance decreases but still allows for the object detection of the object detector 100 under indoor environments.

According to the example of FIGs. 31A, 31B, and 31C, the output voltage of the waveform processing circuit is detected three times with different threshold voltages, which allows for an accurate detection of a decrease in the amount of light emission of the light source and the light-receptive sensitivity of the light detection system.

As can be seen from FIG. 31C, the object detector 100 is operable but the performance deteriorates under indoor environments.

To vary the threshold voltage of the comparator, the threshold voltage is preliminarily generated by smoothing a pulse-width modulation (PWM) signal, and the duty of the PWM signal is changed.

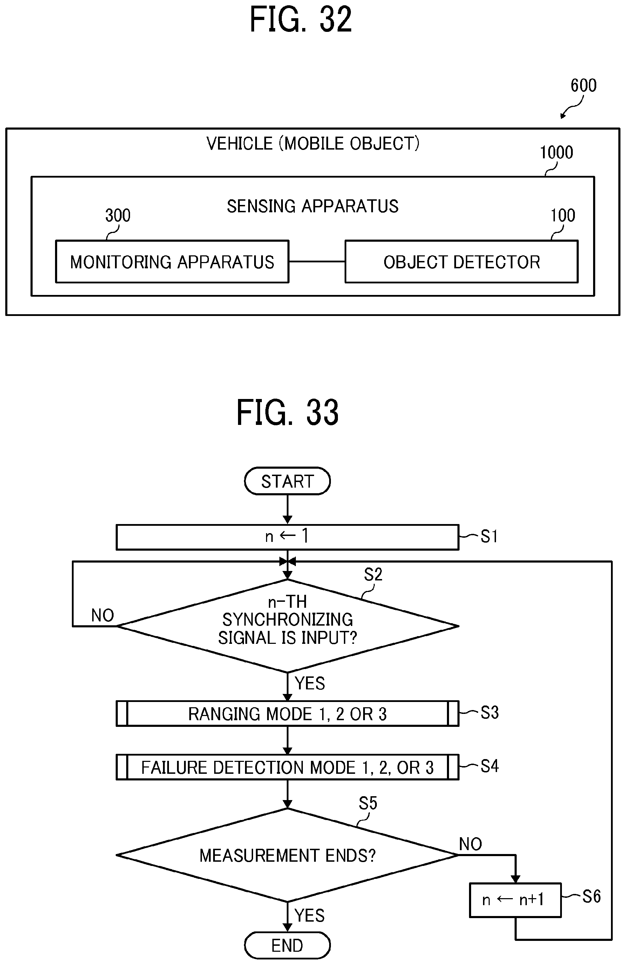

FIG. 32 is a block diagram of a sensing apparatus 1000 provided with the object detector 100. The sensing apparatus 1000 is mountable on a vehicle (mobile object 600) and further includes a monitoring control apparatus 300 electrically connected to the object detector 100. The object detector 100 is mountable near a bumper or a rear-view mirror in a vehicle. The monitoring control apparatus 300 estimates, based on the detection results of the object detector 100, the size or shape of an object, and calculates the position and movement data of the object, thus recognizing the type of the object. The monitoring control apparatus 300 ultimately determines the presence or absence of danger. When the monitoring control apparatus 300 has detected the presence of danger, for example, the monitoring control apparatus 300 alerts an operator of the mobile object to the danger, or sends instructions to a steering controller of the mobile object to avoid the danger by controlling a steering wheel. Moreover, the monitoring control apparatus 300 may send instructions to the ECU to brake the mobile object. It is to be noted that the sensing apparatus 1000 receives power supply from a vehicle battery, for example.

Further, the monitoring control apparatus 300 may be combined with the object detector 100. Alternatively, the monitoring control apparatus 300 may be separate from the object detector 100. In some embodiments, the monitoring control apparatus 300 may perform at least some of the control performed by the ECU in some embodiments.

A description is given of specific examples (ranging processes 1 to 4) of the ranging process performed by the object detector.

The ranging process 1 is described with reference with FIG. 33.

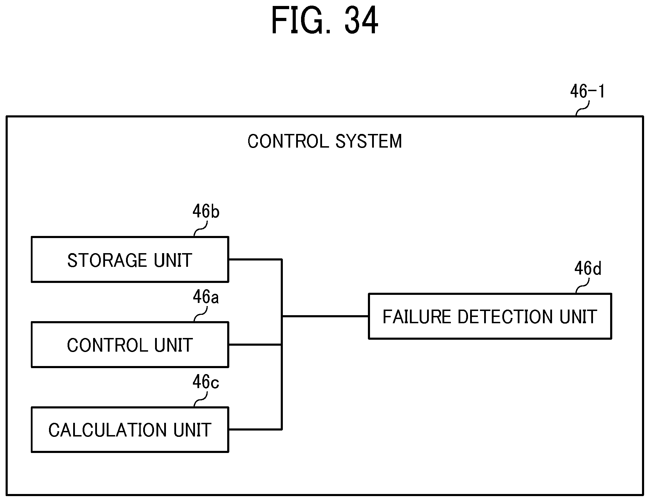

FIG. 34 is an illustration of a configuration of a control system 46-1 according to Example 1 of the embodiment of the control system 46 used in the ranging process 1.

As illustrated in FIG. 34, the control system 46-1 includes a control unit 46a, a storage unit 46b, a calculation unit 46c, and a failure detection unit 46d.

In the control system 46-1, the storage unit 46b is implemented by, for example, a memory or a hard disk. The control unit 46a and the calculation unit 46c are implemented by, for example, a central processing unit (CPU), an integrated circuit (IC), and a field programmable gate array (FPGA).

FIG. 33 is a flowchart of a computational algorithm executed by the control system 46 according to an embodiment of the present disclosure. The ranging process 1 starts when the object detector 100 is powered.

In step S1, n is set to 1.

In step S2, the object detector 100 determines whether the n-th synchronizing signal (the n-th synchronizing signal counted from the first synchronizing signal) is input (received by the control system 46-1). When an affirmative determination is made (YES in step S2), the process proceeds to step S3. When a negative determination is made (NO in step S2), the same process is performed again.

In step S3, the object detector 100 performs a ranging mode 1, 2 or 3. Each ranging mode is executed by the control unit 46a, the storage unit 46b, and the calculation unit 46c during the n-th scanning of the effective scanning area (the n-th scanning operation counted from the first scanning operation). The ranging modes 1, 2 and 3 are described in detail later.

In step S4, the failure detection mode 1, 2 or 3 is executed.

In this step, the failure detection mode 1 is executed when the ranging mode 1 is executed in step S3, the failure detection mode 2 is executed when the ranging mode 2 is executed in step S3, and the failure detection mode 3 is executed when the ranging mode 3 is executed in step S3.

Each failure detection mode is executed by the failure detection unit 46d during the scanning of an area outside the effective scanning area.

The failure detection modes 1, 2 and 3 are described in detail later.

In step S5, the object detector 100 determines whether measurement ends. Specifically, the object detector 100 makes an affirmative determination (YES in step S5) when powered off, and makes a negative determination (NO in step S5) when still powered on. When an affirmative determination is made (YES in step S5), the process ends. When a negative determination is made (NO in step S5), the process proceeds to step S6.

In step S6, n is incremented. When step S6 is executed, the process returns to step S2.

Note that the time during the scanning of an area outside the effective scanning area, i.e., the execution of each failure detection mode in step S4 is, for example, a time (time 1) from when the n-th scanning of the effective scanning area ends to when the (n + 1)th synchronizing signal is input (received by the control system 46-1), a time (time 2) from when the (n + 1)th synchronizing signal is input (received by the control system 46-1) to when the (n + 1)th scanning starts, or a time extending from the time 1 to the time 2.

Further, the order of step S3 and step S4 may be reversed. That is, the ranging mode may be executed after executing the failure detection mode.

In this case, the time during the scanning of an area outside the effective scanning area, i.e., the execution of the failure detection mode in step S4 is, for example, the time from when the n-th synchronizing signal is input (received by the control system 46) to when the n-th scanning of the effective scanning area starts.

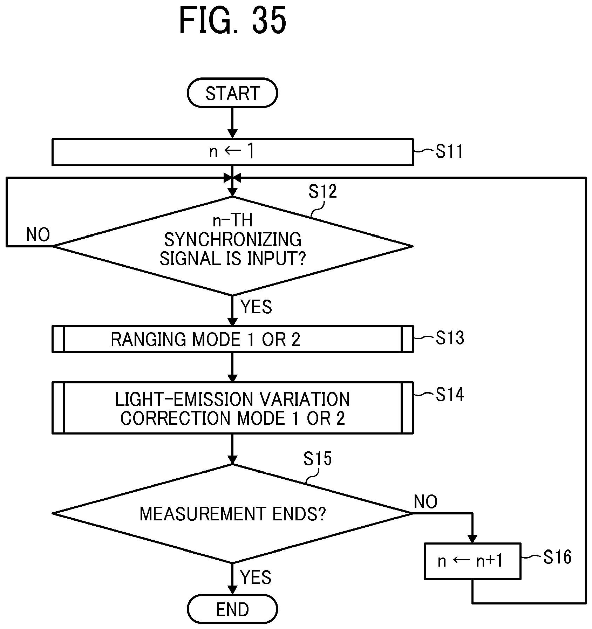

The ranging process 2 is described with reference with FIG. 35.

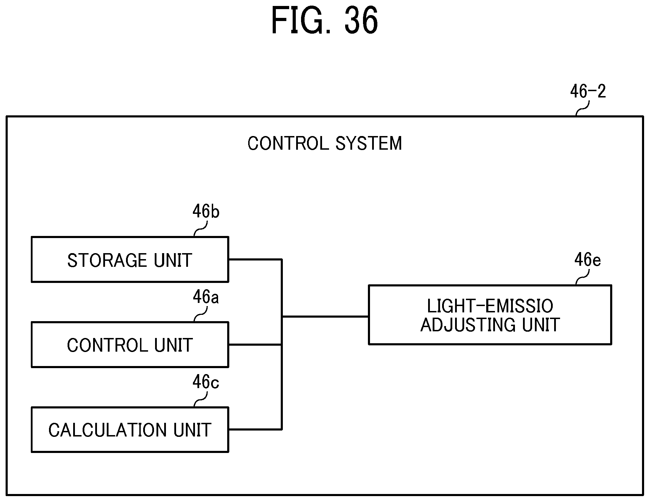

FIG. 36 is an illustration of a configuration of a control system 46-2 according to Example 2 of the embodiment of the control system 46 used in the ranging process 2.

As illustrated in FIG. 36, the control system 46-2 includes the control unit 46a, the storage unit 46b, the calculation unit 46c, and a light-emission adjusting unit 46e.

In the control system 46-2, the storage unit 46b is implemented by, for example, a memory or a hard disk. The control unit 46a and the calculation unit 46c are implemented by, for example, a central processing unit (CPU), an integrated circuit (IC), and a field programmable gate array (FPGA).

FIG. 35 is a flowchart of a computational algorithm executed by the control system 46 according to an embodiment of the present disclosure. The ranging process 2 starts when the object detector 100 is powered.

In step S11, n is set to 1.

In step S12, the object detector 100 determines whether the n-th synchronizing signal (the n-th synchronizing signal counted from the first synchronizing signal) is input (received by the control system 46-2). When an affirmative determination is made (YES in step S12), the process proceeds to step S13. When a negative determination is made (NO in step S2), the same process is performed again.

In step S13, the object detector 100 performs a ranging mode 1 or 2. Each ranging mode is executed by the control unit 46a, the storage unit 46b, and the calculation unit 46c during the n-th scanning of the effective scanning area. The ranging modes 1 and 2 are described in detail later.

In step S14, a first or second mode of correcting a variation in amount of light emission (a light-emission variation correction mode 1 or 2 in step S14) is performed.

In the present Example, the light-emission variation correction mode 1 is performed when the ranging mode 1 has been performed in step S13, and the light-emission variation correction mode 2 is performed when the ranging mode 2 has been performed in step S13.

Each light-emission variation correction mode is executed by the light-emission adjusting unit 46e during the scanning of an area outside the effective scanning area.

The light-emission variation correction modes 1 and 2 are described in detail later.

In step S15, the object detector 100 determines whether measurement ends. Specifically, the object detector 100 makes an affirmative determination (YES in step S15) when powered off, and makes a negative determination (NO in step S15) when still powered on. When an affirmative determination is made (YES in step S15), the process ends. When a negative determination is made (NO in step S15), the process proceeds to step S16.

In step S16, n is incremented. When step S16 is executed, the process returns to step S12.

Note that the time during the scanning of an area outside the effective scanning area, i.e., the execution of each light-emission variation correction mode in step S14 is, for example, a time (time 1) from when the n-th scanning of the effective scanning area ends to when the (n + 1)th synchronizing signal is input (received by the control system 46-2), a time (time 2) from when the (n + 1)th synchronizing signal is input (received by the control system 46-2) to when the (n + 1)th scanning starts, or a time extending from the time 1 to the time 2.

Further, the order of step S13 and step S14 may be reversed. That is, the ranging mode may be executed after executing the light-emission variation correction mode.

In this case, the time during the scanning of an area outside the effective scanning area, i.e., the execution of the light-emission variation correction mode in step S14 is, for example, the time from when the n-th synchronizing signal is input (received by the control system 46-2) to when the n-th scanning of the effective scanning area starts.

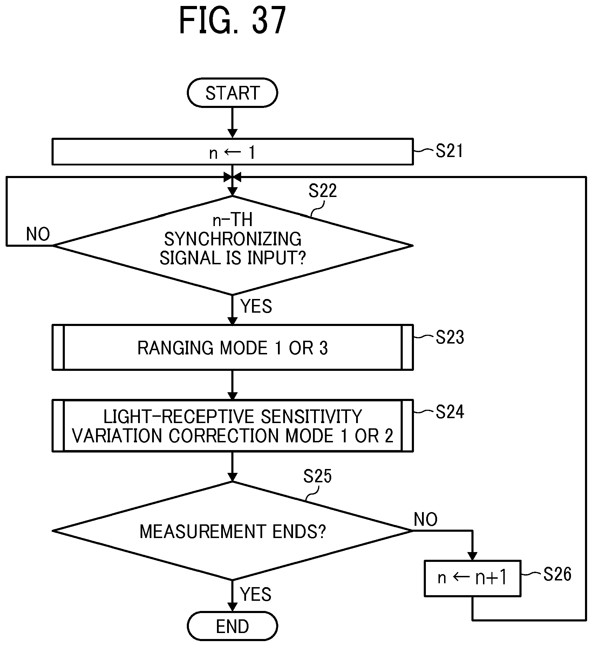

The ranging process 3 is described with reference with FIG. 37.

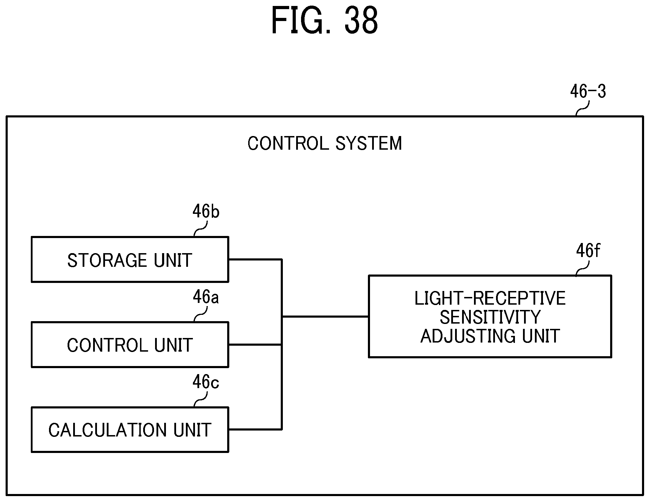

FIG. 38 is an illustration of a configuration of a control system 46-3 according to Example 3 of the embodiment of the control system 46 used in the ranging process 3.

As illustrated in FIG. 38, the control system 46-3 includes the control unit 46a, the storage unit 46b, the calculation unit 46c, and a light-receptive sensitivity adjusting unit 46f.

In the control system 46-3, the storage unit 46b is implemented by, for example, a memory or a hard disk. The control unit 46a and the calculation unit 46c are implemented by, for example, a central processing unit (CPU), an integrated circuit (IC), and a field programmable gate array (FPGA).

FIG. 37 is a flowchart of a computational algorithm executed by the control system 46 according to an embodiment of the present disclosure. The ranging process 3 starts when the object detector 100 is powered.

In step S21, n is set to 1.

In step S22, the object detector 100 determines whether the n-th synchronizing signal (the n-th synchronizing signal counted from the first synchronizing signal) is input (received by the control system 46-3). When an affirmative determination is made (YES in step S22), the process proceeds to step S23. When a negative determination is made (NO in step S22), the same process is performed again.

In step S23, the object detector 100 performs the ranging mode 1 or 3. Each ranging mode is executed by the control unit 46a, the storage unit 46b, and the calculation unit 46c during the n-th scanning of the effective scanning area. The ranging modes 1 and 3 are described in detail later.

In step S24, a first or second mode of correcting a variation in light-receptive sensitivity (a light-receptive sensitivity variation correction mode 1 or 2 in step S24) is performed.

In the present Example, the light-receptive sensitivity variation correction mode 1 is performed when the ranging mode 1 has been performed in step S23, and the light-receptive sensitivity variation correction mode 2 is performed when the ranging mode 2 has been performed in step S23.

Each light-receptive sensitivity variation correction mode is executed by the light-receptive sensitivity adjusting unit 46f during the scanning of an area outside the effective scanning area.

The light-receptive sensitivity variation correction modes 1 and 2 are described in detail later.

In step S25, the object detector 100 determines whether measurement ends. Specifically, the object detector 100 makes an affirmative determination (YES in step S25) when powered off and makes a negative determination (NO in step S25) when still powered on. When an affirmative determination is made (YES in step S25), the process ends. When a negative determination is made (NO in step S25), the process proceeds to step S26.

In step S26, n is incremented. When step S26 is executed, the process returns to step S22.

Note that the time during the scanning of an area outside the effective scanning area, i.e., the execution of each light-receptive sensitivity variation correction mode in step S24 is, for example, a time (time 1) from when the n-th scanning of the effective scanning area ends to when the (n + 1)th synchronizing signal is input (received by the control system 46-2), a time (time 2) from when the (n + 1)th synchronizing signal is input (received by the control system 46-2) to when the (n + 1)th scanning starts, or a time extending from the time 1 to the time 2.

Further, the order of step S23 and step S24 may be reversed. That is, the ranging mode may be executed after executing the light-receptive sensitivity variation correction mode.

In this case, the time during the scanning of an area outside the effective scanning area, i.e., the execution of the light-receptive sensitivity variation correction mode in step S24 is, for example, the time from when the n-th synchronizing signal is input (received by the control system 46-2) to when the n-th scanning of the effective scanning area starts.

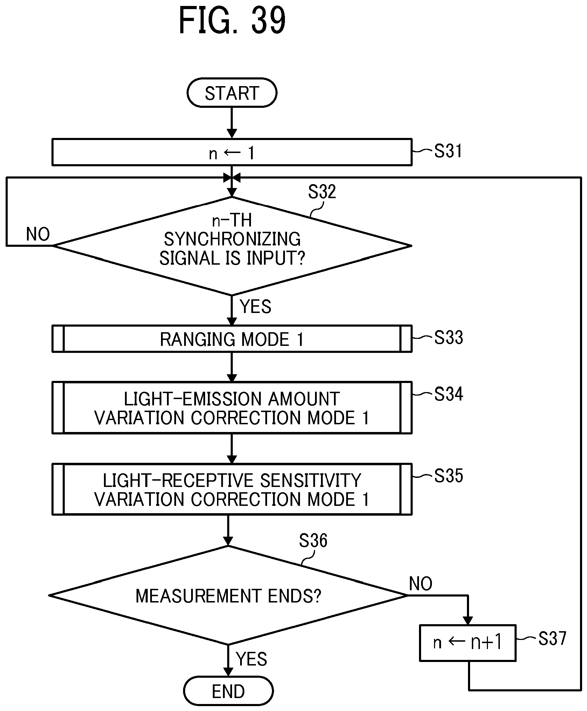

The ranging process 4 is described with reference with FIG. 39.

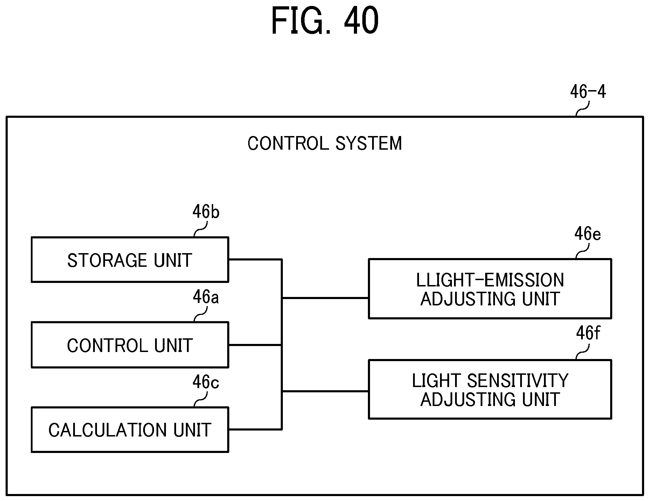

FIG. 40 is an illustration of a configuration of a control system 46-4 according to Example 4 of the embodiment of the control system 46 used in the ranging process 4.

As illustrated in FIG. 40, the control system 46-4 includes the control unit 46a, the storage unit 46b, the calculation unit 46c, the light-emission adjusting unit 46e, and the light-receptive sensitivity adjusting unit 46f.

In the control system 46-4, the storage unit 46b is implemented by, for example, a memory or a hard disk. The control unit 46a and the calculation unit 46c are implemented by, for example, a central processing unit (CPU), an integrated circuit (IC), and a field programmable gate array (FPGA).

FIG. 39 is a flowchart of a computational algorithm executed by the control system 46 according to an embodiment of the present disclosure. The ranging process 4 starts when the object detector 100 is powered.

In step S31, n is set to 1.

In step S32, the object detector 100 determines whether the n-th synchronizing signal (the n-th synchronizing signal counted from the first synchronizing signal) is input (received by the control system 46-4). When an affirmative determination is made (YES in step S32), the process proceeds to step S33. When a negative determination is made (NO in step S32), the same process is performed again.

In step S33, the object detector 100 performs the ranging mode 1. The ranging mode 1 is executed by the control unit 46a, the storage unit 46b, and the calculation unit 46c during the n-th scanning of the effective scanning area. The ranging mode 1 is described in detail later.

In step S34, the light-emission variation correction mode 1 is performed. The light-emission variation correction mode 1 is executed by the light-emission adjusting unit 46e during the scanning of an area outside the effective scanning area. The light-emission variation correction mode 1 is described in detail later.

In step S35, the light-receptive sensitivity variation correction mode 1 is performed. The light-receptive sensitivity variation correction mode 1 is executed by the light-receptive sensitivity adjusting unit 46f during the scanning of an area outside the effective scanning area. The light-receptive sensitivity variation correction mode 1 is described in detail later.

In step S36, the object detector 100 determines whether measurement ends. Specifically, the object detector 100 makes an affirmative determination (YES in step S36) when powered off, and makes a negative determination (NO in step S36) when still powered on. When an affirmative determination is made (YES in step S36), the process ends. When a negative determination is made (NO in step S36), the process proceeds to step S37.

In step S37, n is incremented. When step S37 is executed, the process returns to step S32.

Note that the time during the scanning of an area outside the effective scanning area, i.e., the execution of the light-emission variation correction mode 1 in step S34 is, for example, a time (time 1) from when the n-th scanning of the effective scanning area ends to when the (n + 1)th synchronizing signal is input (received by the control system 46-4), a time (time 2) from when the (n + 1)th synchronizing signal is input (received by the control system 46-4) to when the (n + 1)th scanning starts, or a time extending from the time 1 to the time 2.

Note that the time during the scanning of an area outside the effective scanning area, i.e., the execution of the light-receptive sensitivity variation correction mode 1 in step S35 is, for example, a time (time 1) from when the n-th scanning of the effective scanning area ends to when the (n + 1)th synchronizing signal is input (received by the control system 46-4), a time (time 2) from when the (n + 1)th synchronizing signal is input (received by the control system 46-4) to when the (n + 1)th scanning starts, or a time extending from the time 1 to the time 2.

That is, the light-emission variation correction mode 1 (step S34) may be executed before the ranging mode 1 (step S33).

In this case, the time during the scanning of an area outside the effective scanning area, i.e., the execution of the light-emission variation correction mode in step S34 is, for example, the time from when the n-th synchronizing signal is input (received by the control system 46-4) to when the n-th scanning of the effective scanning area starts.

That is, the light-receptive sensitivity variation correction mode 1 (step S35) may be executed before the ranging mode 1 (step S33).

In this case, the time during the scanning of an area outside the effective scanning area, i.e., the execution of the light-receptive sensitivity variation correction mode in step S35 is, for example, the time from when the n-th synchronizing signal is input (received by the control system 46-4) to when the n-th scanning of the effective scanning area starts.

That is, the light-receptive sensitivity variation correction mode 1 (step S35) may be executed before the light-emission variation correction mode (step S34).

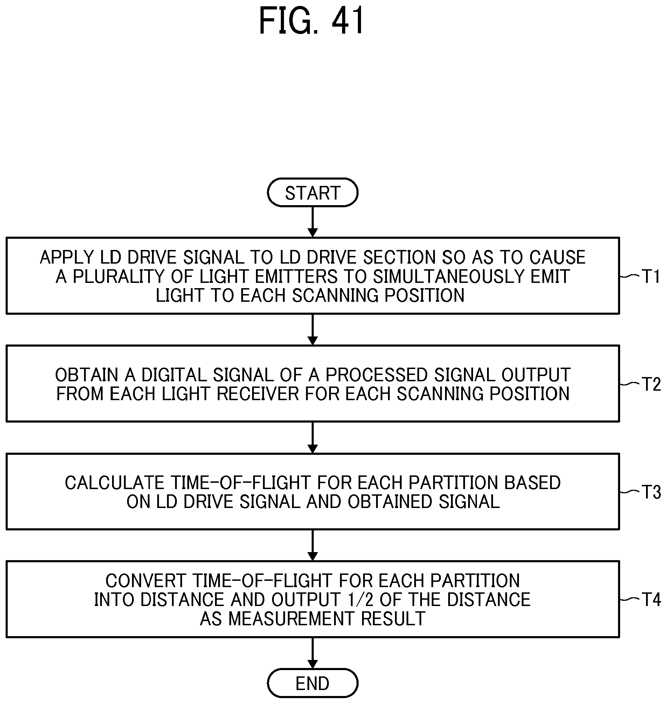

The ranging mode 1 is described with reference with FIG. 41.

The ranging mode 1 is performed by the object detector 100 in which light source 11 includes a plurality of light emitters arranged in the vertical direction (the Z-axis direction) and the time measurement PS 42 includes a plurality of light receivers arranged in the vertical direction. In the ranging mode 1, the object detector 100 detects object information for each of a plurality of areas (hereinafter, referred to simply as partitions) into which the detection field of the time measurement PS 42 is two-dimensionally divided.

In this case, the projection optical system 20 and the light receiving optical system 30 are disposed such that the plurality of light receivers receives light beams emitted from the plurality of light emitters, respectively in detecting object information (see FIG. 21).

Further, it is assumed that an LD drive section 12 is used for a plurality of light emitters in common, or an LD drive section 12 is provided for each of the light emitters.

It is also assumed that a waveform processing circuit and a digital signal output circuit (a comparator or an A/D converter) are provided for each of the light receivers.

In step T1, the control unit 46a applies a LD drive signal to the LD drive section 12 to cause the plurality of light emitters to emit light at the same timing for each scanning position (each pulse of the LD drive signal).

In step T2, the control unit 46a obtains a signal (digital signal) for each scanning position, which is output from each light receiver, processed by the waveform processing circuit corresponding to the same light receiver, and digitized by the digital signal output circuit output. The control unit 46a further stores the obtained digital signal in association with the scanning position and the light receiver in the storage unit 46b.

In step T3, the calculation unit 46c calculates time-of-flight (time for reciprocation of light between the object detector 100 and the target) for each partition, based on each pulse of the LD drive signal and a digital signal (corresponding to the same pulse) for each light receiver for each scanning position stored in the storage unit 46b.

In step T4, the calculation unit 46c converts the calculated time-of-flight for each partition into distance, and outputs 1/2 of the distance as a measurement result. As a result, the object detector 100 can generate a distance image constituted by the distance information for each partition.

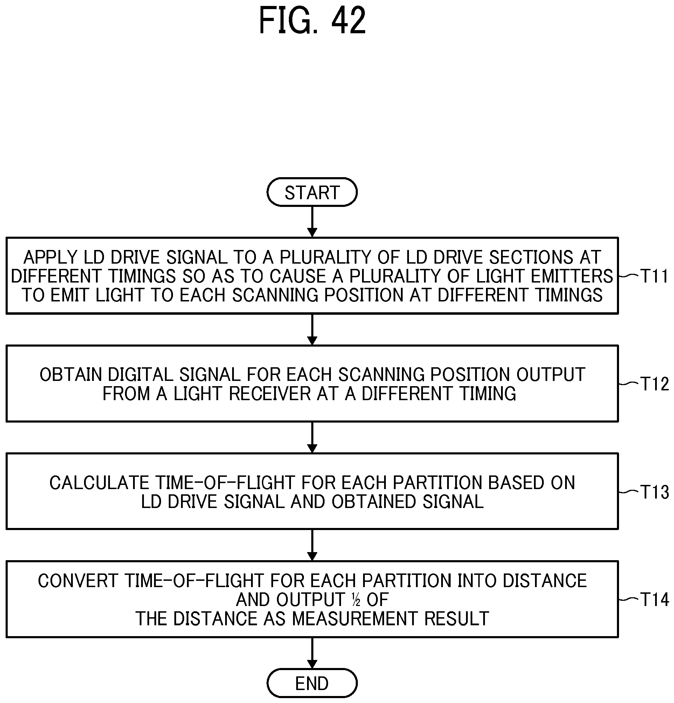

The ranging mode 2 is described with reference with FIG. 42.

The ranging mode 2 is performed by the object detector 100 in which light source 11 includes a plurality of light emitters arranged in the vertical direction (the Z-axis direction) and the time measurement PS 42 includes one light receiver. In the ranging mode 2, the object detector 100 detects object information for each of a plurality of areas (hereinafter, referred to simply as partitions) into which the detection field of the time measurement PS 42 is two-dimensionally divided.

In this case, the projection optical system 20 and the light receiving optical system 30 are disposed such that each light emitter corresponds to the light receiver, that is, the light receiver receives light emitted from each light emitter in detecting the object information.

Further, it is assumed that the LD drive section 12 is provided for each light emitter.

In step T11, the control unit 46a applies LD drive signals to a plurality of LD drive section 12 at different timings, so as to cause the plurality of light emitters to emit light at different timing for each scanning position.

In step T12, the control unit 46a obtains a signal (digital signal) for each scanning position, which is output from the light receiver at a different timing (a timing corresponding to the light-emitting timing of each light emitter), processed by the waveform processing circuit, and digitized by the digital signal output circuit. The control unit 46a further stores the obtained digital signal in association with the scanning position and the light emitter in the storage unit 46b.

In step T13, the calculation unit 46c calculates time-of-flight (time for reciprocation of light between the object detector 100 and the target) for each partition, based on pulse of each of the plurality of LD drive signals applied at different timings and a digital signal (corresponding to the same pulse) for each light emitter for each scanning position stored in the storage unit 46b.

In step T14, the calculation unit 46c converts the calculated time-of-flight for each partition into distance, and outputs 1/2 of the distance as a measurement result. As a result, the object detector 100 can generate a distance image constituted by the distance information for each partition.

Note that, when the light-emission variation correction mode is performed in addition to the ranging modes 1 and 2 in the ranging processes 2 and 4, the LD drive section 12 is provided for each light emitter to allow for an adjustment of the amount of drive current to be supplied to each light emitter in an individual manner.

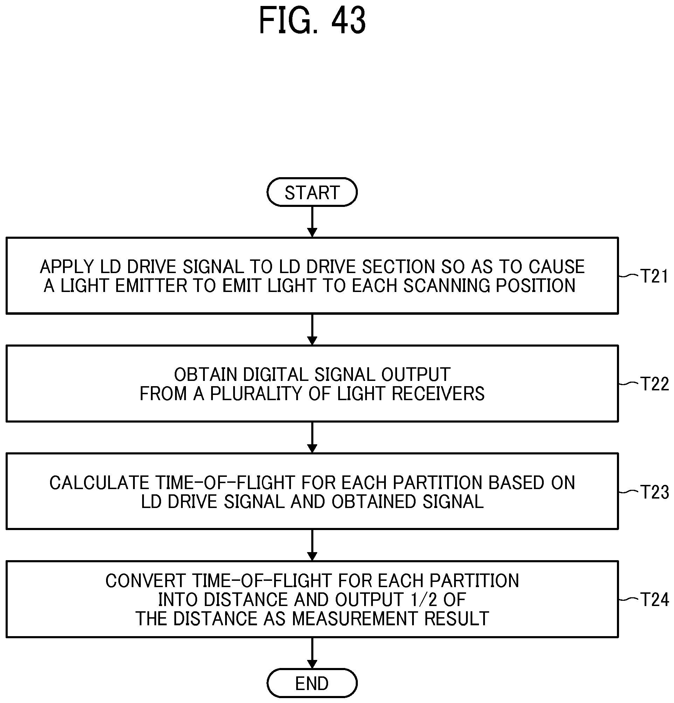

The ranging mode 3 is described with reference with FIG. 43.

The ranging mode 3 is performed by the object detector 100 in which light source 11 includes one light emitter and the time measurement PS 42 includes a plurality of light receivers arranged in the vertical direction (the Z-axis direction). In the ranging mode 3, the object detector 100 detects object information for each of a plurality of areas (hereinafter, referred to simply as partitions) into which the detection field of the time measurement PS 42 is two-dimensionally divided.

In this case, the projection optical system 20 and the light receiving optical system 30 are disposed such that the light emitter corresponds to the plurality of light receivers, that is, each of the light receivers receives light emitted from the light emitter in detecting the object information. It is also assumed that a waveform processing circuit and a digital signal output circuit are disposed for each of the light receivers.

In step T21, the unit 46a applies an LD drive signal to an LD drive section 12 at, so as to cause the light emitter to emit light to each scanning position.

In step T22, the control unit 46a obtains a signal (digital signal) for each scanning position, which is output from each light receiver, processed by the waveform processing circuit corresponding to the same light receiver, and digitized by the digital signal output circuit output. The control unit 46a further stores the obtained digital signal in association with the scanning position and the light receiver in the storage unit 46b.

In step T23, the calculation unit 46c calculates time-of-flight (time for reciprocation of light between the object detector 100 and the target) for each partition, based on each pulse of the LD drive signal and a digital signal (corresponding to the same pulse) for each light receiver for each scanning position stored in the storage unit 46b.

In step T24, the calculation unit 46c converts the calculated time-of-flight for each partition into distance, and outputs 1/2 of the distance as a measurement result. As a result, the object detector 100 can generate a distance image constituted by the distance information for each partition.

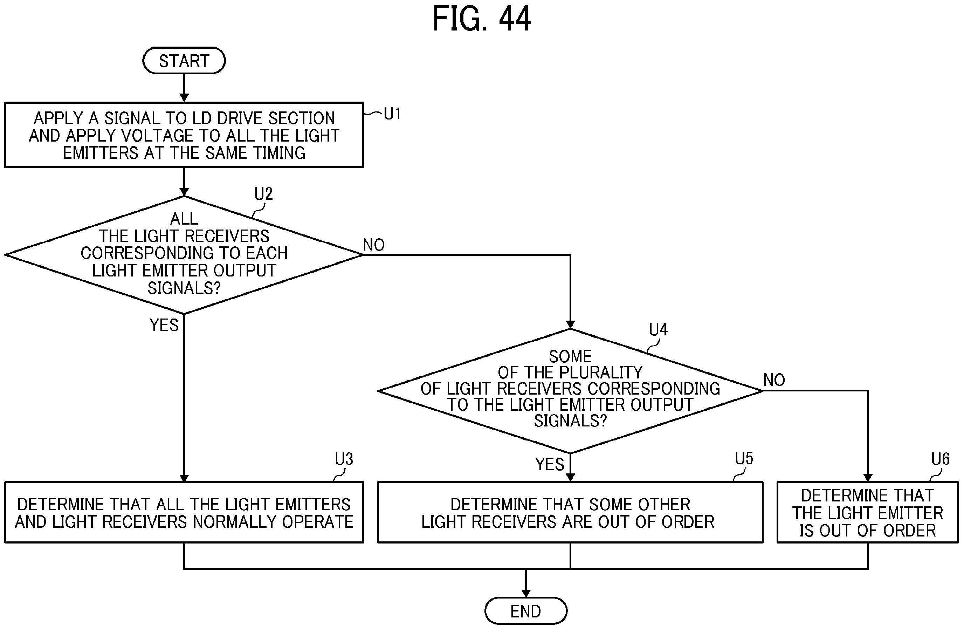

The failure detection mode 1 is described with reference to FIG. 44.

The failure detection mode 1 is performed by the object detector 100 in which light source 11 includes a plurality of light emitters arranged in the vertical direction (the Z-axis direction) and the time measurement PS 42 includes a plurality of light receivers arranged in the vertical direction, so as to detect presence or absence of failure of the light emitter and the light receivers.

In this case, the projection optical system 20 and the light receiving optical system 30 are disposed such that each emitter corresponds to a plurality of light receivers, that is, light emitted from each light emitter strikes a plurality of light emitters in detecting the conditions (see FIG. 17 and FIG. 22). It is assumed that a waveform processing circuit and a digital signal output circuit are disposed for each of the light receivers.

Further, it is assumed that an LD drive section 12 is used for a plurality of light emitters in common, or an LD drive section 12 is provided for each of the light emitters.

In step U1, the failure detection unit 46d applies a signal (for example, a rectangular pulse signal) to an LD drive section 12 to apply a voltage to all the light emitters at the same time.

In step U2, the failure detection unit 46d determines whether all the light receivers corresponding to each light emitter have output signals. Such a determination is made by monitoring the presence or absence of signals output from the waveform processing circuits corresponding to all the light receivers by the failure detection unit 46d. When an affirmative determination is made (YES in step U2), the process proceeds to step U3. When a negative determination is made (NO in step U2), the process proceeds to step U4.

In step U3, the failure detection unit 46d determines that all the light emitters and all the light receivers operate normally (not in failure). When step U3 is executed, the flow of the failure detection mode 1 ends.

In step U4, the failure detection unit 46d determines whether some of the plurality of light receivers corresponding to the light emitter have output signals. When an affirmative determination is made (YES in step U4), the process proceeds to step U5. When a negative determination is made (NO in step U4), the process proceeds to step U6.

In step U5, the failure detection unit 46d determines that some other light receivers are in failure (out of order), and displays the determination result (Lidar is in failure) as a warning, for example, in the instrument panel of the automobile on which the object detector 100 is mounted. When step U 5 is executed, the flow of the failure detection mode 2 ends.

In step U6, the failure detection unit 46d determines that the light emitter is in failure (out of order), and displays the determination result (Lidar is in failure) as a warning, for example, in the instrument panel of the automobile on which the object detector 100 is mounted. When step U6 is completed, the flow of the failure detection mode 1 ends.

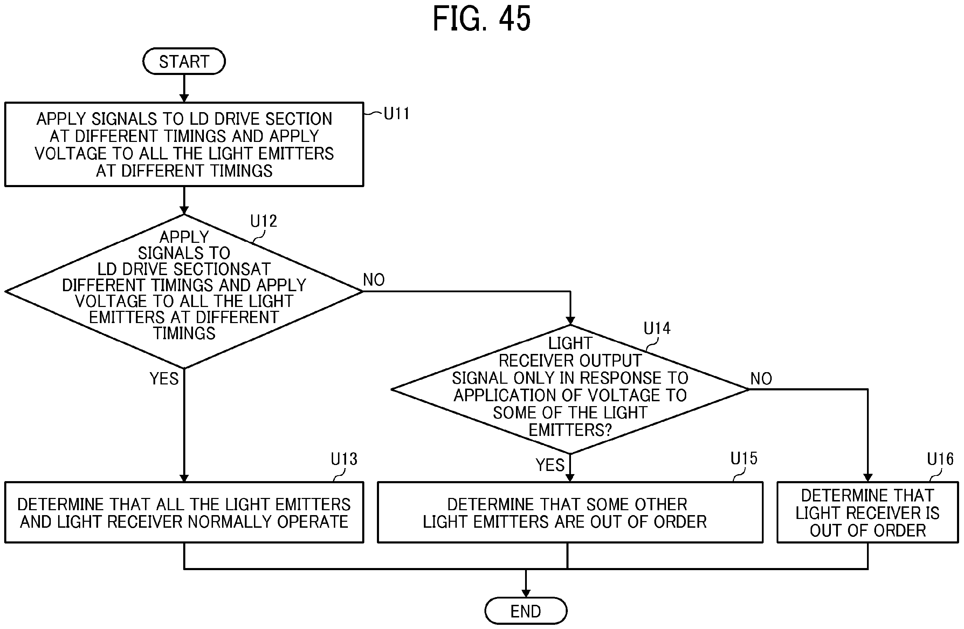

The failure detection mode 2 is described with reference to FIG. 45.

The failure detection mode 2 is performed by the object detector 100 in which light source 11 includes a plurality of light emitters arranged in the vertical direction (the Z-axis direction) and the time measurement PS 42 includes one light receiver, so as to detect presence or absence of failure of the light emitter and the light receivers.

In this case, the projection optical system 20 and the light receiving optical system 30 are disposed such that each light emitter corresponds to the light receiver, that is, the light receiver receives light emitted from each light emitter in detecting the conditions.

Further, it is assumed that the LD drive section 12 is provided for each light emitter.

In step U11, the failure detection unit 46d applies signals (for example, rectangular pulse signals) to a plurality of LD drive sections 12 at different timings to apply voltage to all the light emitters at different timings.

In step U12, the failure detection unit 46d determines whether the light receiver has output a signal in response to application of voltage to each light emitter. Such a determination is made by the failure detection section 46d's monitoring the presence or absence of a signal output from the waveform processing circuits when voltage is applied to each light emitter. When an affirmative determination is made (YES in step U12), the process proceeds to step U13. When a negative determination is made (NO in step U12), the process proceeds to step U14.

In step U13, the failure detection unit 46d determines that the light emitters and the light receiver operate normally (not in failure).

In step U14, the failure detection unit 46d determines whether the light receiver has output a signal only when voltage is applied to some of the light emitters (only in response to application of voltage to some of the light emitters). When an affirmative determination is made (YES in step U14), the process proceeds to step U15. When a negative determination is made (NO in step U14), the process proceeds to step U16.

In step U15, the failure detection unit 46d determines that some other light emitters are in failure (out of order), and displays the determination result (Lidar is in failure) as a warning, for example, in the instrument panel of the automobile on which the object detector 100 is mounted. When step 15 is completed, the flow of the failure detection mode 2 ends.

In step U16, the failure detection unit 46d determines that the light receiver is in failure (out of order), and displays the determination result (Lidar is in failure) as a warning, for example, in the instrument panel of the automobile on which the object detector 100 is mounted. When step U16 is completed, the flow of the failure detection mode 2 ends.

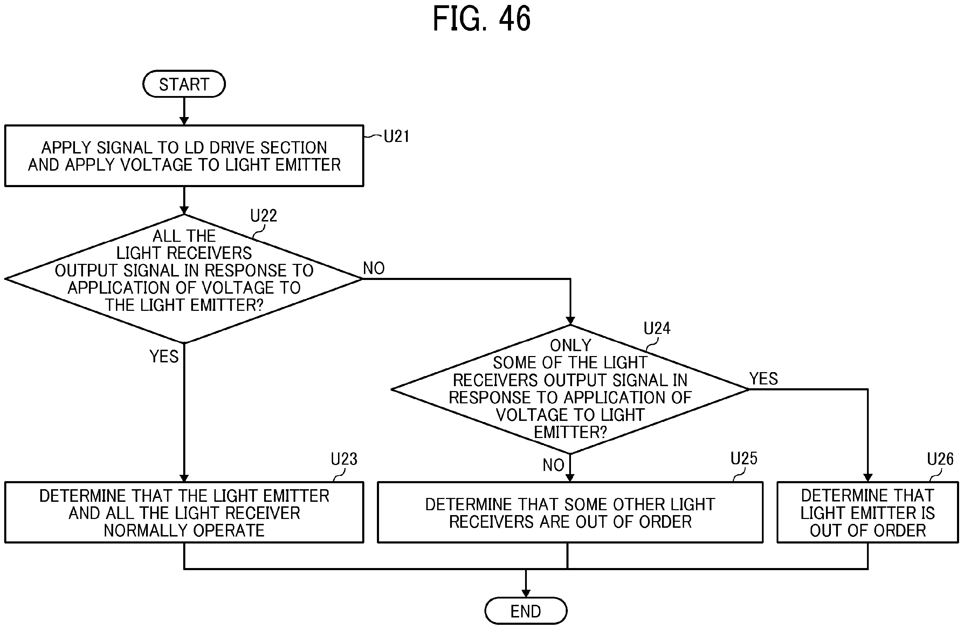

The failure detection mode 3 is described with reference to FIG. 46.

The failure detection mode 3 is performed by the object detector 100 in which light source 11 includes one light emitter and the time measurement PS 42 includes a plurality of light receivers arranged in the vertical direction, so as to detect presence or absence of failure of the light emitter and the light receivers.

In this case, the projection optical system 20 and the light receiving optical system 30 are disposed such that the light emitter corresponds to the plurality of light receivers, that is, each of the light receivers receives light emitted from the light emitter in detecting the condition.

It is assumed that a waveform processing circuit and a digital signal output circuit are disposed for each of the light receivers.

In step U21, the failure detection unit 46d applies a signal (for example, a rectangular pulse signal) to an LD drive section 12 to apply voltage to all the light emitter.

In step U22, the failure detection unit 46d determines whether all the light receivers have output signals in response to application of voltage to the light emitter. Such a determination is made by monitoring the presence or absence of signals output from the waveform processing circuits when voltage is applied to the light emitter by the failure detection unit 46d. When an affirmative determination is made (YES in step U22), the process proceeds to step U23. When a negative determination is made (NO in step U22), the process proceeds to step U24.

In step U23, the failure detection unit 46d determines that the light emitter and all the light receivers operate normally (not in failure).

In step U24, the failure detection unit 46d determines whether only some of the light receivers have output signals when voltage is applied to the light emitter (in response to application of voltage to the light emitter). When an affirmative determination is made (YES in step U24), the process proceeds to step U25. When a negative determination is made (NO in step U24), the process proceeds to step U26.

In step U25, the failure detection unit 46d determines that some other light receivers are in failure (out of order), and displays the determination result (Lidar is in failure) as a warning, for example, in the instrument panel of the automobile on which the object detector 100 is mounted. When step U25 is completed, the flow of the failure detection mode 3 ends.

In step U26, the failure detection unit 46d determines that the light emitter is in failure (out of order), and displays the determination result (Lidar is in failure) as a warning, for example, in the instrument panel of the automobile on which the object detector 100 is mounted. When step U26 is completed, the flow of the failure detection mode 3 ends.

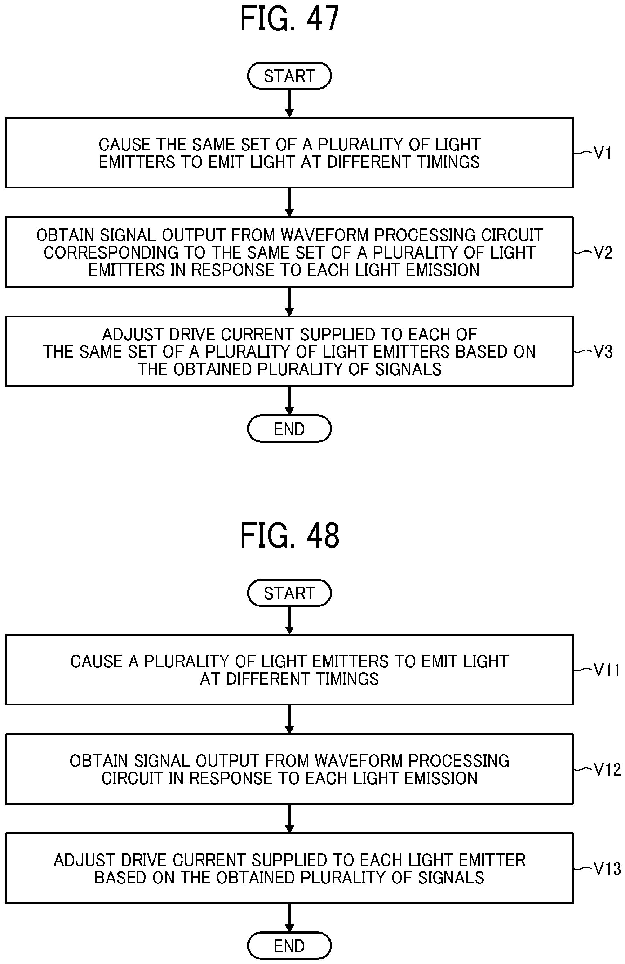

The light-emission variation correction mode 1 is described with reference with FIG. 47.

The light-emission variation correction mode 1 is performed by the object detector 100 in which light source 11 includes a plurality of light emitters arranged in the vertical direction (the Z-axis direction) and the time measurement PS 42 includes a plurality of light receivers arranged in the vertical direction, so as to correct variations in the amount of light emission of the light emitters.

In this case, the projection optical system 20 and the light receiving optical system 30 are disposed such that a plurality of light emitters corresponds to the same light receiver, that is, light emitted from the plurality of light emitters strikes the same light receiver in detecting the conditions (see FIG. 17 and FIG. 22).

Further, it is assumed that the LD drive section 12 is provided for each light emitter.

It is assumed that a waveform processing circuit and a digital signal output circuit are disposed for each of the light receivers.

In step V1, assuming that a plurality of light emitters corresponding to the same light receiver is defined as the same set of a plurality of light emitters, the light-emission adjusting unit 46e causes the same set of light emitters to emit light at different timings. Specifically, the light-emission adjusting unit 46e applies a signal including a plurality of pulses to LD drive section 12 to supply drive currents to the same set of plural light emitters at different timings.

In step V2, the light-emission adjusting unit 46e obtains a signal output from the waveform processing circuit disposed for the light receiver corresponding to the same set of a plurality of light emitters, in response to light emission of each light emitter.

In step V3, the light-emission adjusting unit 46e adjusts the amount of the drive current supplied to each of the same set of plurality of light emitters based on the plurality of signals obtained in step V2. The light-emission adjusting unit 46e adjusts the amount of the drive current by changing the amount of voltage of the power supply Vcc (the sum of the voltages between the plates of the capacitor C1 and the voltage between the terminals of resistor R1) in FIG. 26.

Specifically, the light-emission adjusting unit 46e sets the value of the drive current supplied to each of the light emitters such that each of the same set of light emitters has the substantially same amount of light emission (for example, a rated value), and then stores the set value in the storage unit 46b. Then, it is preferable to supply the drive current of the set value to the light emitters in the ranging mode 1 to be executed next.

The light-emission variation correction mode 2 is described with reference with FIG. 48.

The light-emission variation correction mode 2 is performed by the object detector 100 in which light source 11 includes a plurality of light emitters arranged in the vertical direction (the Z-axis direction) and the time measurement PS 42 includes one light receiver, so as to correct variations in the amount of light emission of the light emitters.

In this case, the projection optical system 20 and the light receiving optical system 30 are disposed such that each light emitter corresponds to the light receiver, that is, the light receiver receives light emitted from each light emitter in detecting the conditions. Further, it is assumed that the LD drive section 12 is provided for each light emitter.

In step V11, the light-emission adjusting unit 46e causes a plurality of light emitters to emit light at different timings. More specifically, the light-emission adjusting unit 46e applies signals (for example, rectangular pulse signals) to the plurality of LD drive sections 12 corresponding to the plurality of light emitters at different timings, so as to apply drive currents to the plurality of light emitters at different timings.

In step V12, the light-emission adjusting unit 46e obtains a signal output from the waveform processing circuit in response to the light emission of each light emitter.

In step V13, the light-emission adjusting unit 46e adjusts the amount of the drive current supplied to the plurality of light emitters based on the plurality of signals obtained in step V12. The light-emission adjusting unit 46e adjusts the amount of the drive current by changing the amount of voltage of the power supply Vcc (the sum of the voltages between the plates of the capacitor C1 and the voltage between the terminals of resistor R1) in FIG. 26.

Specifically, the light-emission adjusting unit 46e sets the value of the drive current supplied to each of the light emitters such that the plurality of light emitters has the substantially same amount of light emission (for example, a rated value), and then stores the set value in the storage unit 46b.

Then, it is preferable to supply the drive current of the set value to the light emitters in the ranging mode 2 to be executed next.

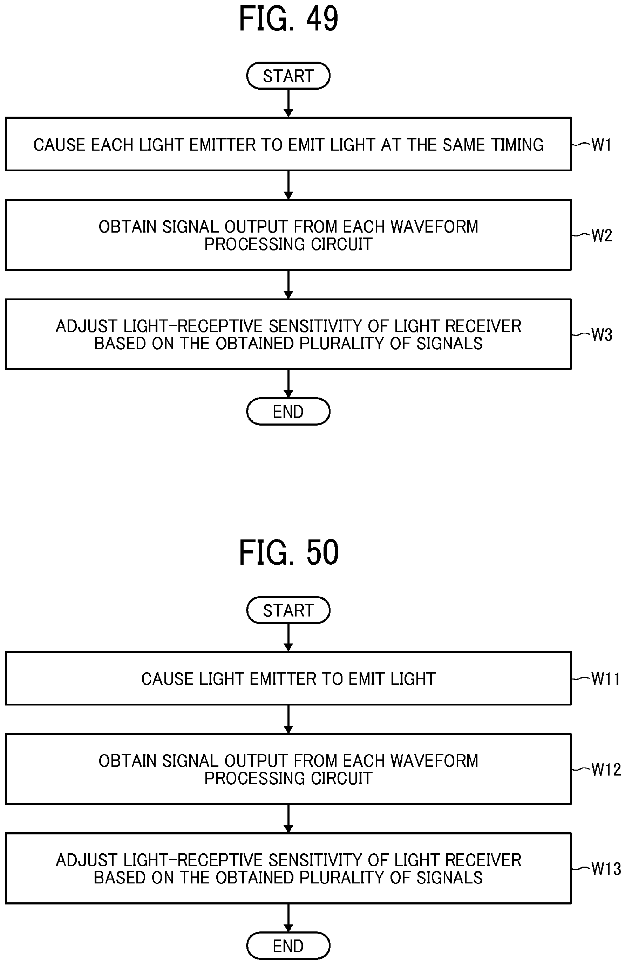

The light-receptive sensitivity variation correction mode 1 is described with reference with FIG. 49.

The light-receptive sensitivity variation correction mode 1 is performed by the object detector 100 in which light source 11 includes a plurality of light emitters arranged in the vertical direction (the Z-axis direction) and the time measurement PS 42 includes a plurality of light receivers arranged in the vertical direction, so as to correct variations in the light-receptive sensitivity of the light detection systems.

In this case, the projection optical system 20 and the light receiving optical system 30 are disposed such that a plurality of light receivers corresponds to the same light emitter, that is, light emitted from the same light emitter strikes the plurality of light receivers in detecting the conditions (see FIG. 17 and FIG. 22).

It is assumed that a waveform processing circuit and a digital signal output circuit are disposed for each of the light receivers.

Further, it is assumed that an LD drive section 12 is used for a plurality of light emitters in common, or an LD drive section 12 is provided for each of the light emitters.

Further, it is assumed that each light detection system has a configuration in which the light-receptive sensitivity is variable as illustrated in FIGs. 27A or 27B.

In step W1, the light-receptive sensitivity adjusting unit 46f causes the plurality of light emitters to emit light at the same timing. More specifically, the light-receptive sensitivity adjusting unit 46f applies a signal (for example, a rectangular pulse signal) to the LD driving section 12 to supply drive current to each light emitter at the same timing.

In step W2, the light-receptive sensitivity adjusting unit 46f obtains a signal output from the waveform processing circuit of each light detection system (light receiver) corresponding to the light emitter. The variations in light-receptive sensitivity of the plurality of light detection systems are reflected in the obtained plurality of signals represents.

In step W3, the light-receptive sensitivity adjusting unit 46f adjusts the light sensitivities of the plurality of light detecting systems based on the obtained plurality of signals.

Specifically, the light-receptive sensitivity adjusting unit 46f sets the bias applied to the gain of a variable-gain amplifier (VGA) or an avalanche photodiode (APD) of each of the light detection systems such that the plurality of light detection systems corresponding to the light emitter has the substantially same light-receptive sensitivity, that is, the output signals of the waveform processing circuits of the plurality of light detection systems has the substantially same peak. The light-receptive sensitivity adjusting unit 46f further stores the set value in the storage unit 46b.

Then, it is preferable to set the bias applied to the gain of the VGA and the APD to the set value in the ranging mode 1 to be executed next.

The light-receptive sensitivity variation correction mode 2 is described with reference with FIG. 50.

The light-receptive sensitivity variation correction mode 2 is performed by the object detector 100 in which light source 11 includes one light emitter and the time measurement PS 42 includes a plurality of light receivers arranged in the vertical direction, so as to correct variations in the light-receptive sensitivity of the light detection systems.

In this case, the projection optical system 20 and the light receiving optical system 30 are disposed such that the light emitter corresponds to the plurality of light receivers in detecting the condition, that is, light emitted from the light emitter strikes the plurality of light receivers.

It is assumed that a waveform processing circuit and a digital signal output circuit are disposed for each of the light receivers.

Further, it is assumed that each light detection system has a configuration in which the light-receptive sensitivity is variable as illustrated in FIGs. 27A or 27B.

In step W11, the light-receptive sensitivity adjusting unit 46f causes the light emitter to emit light. More specifically, the light-receptive sensitivity adjusting unit 46f applies a signal (for example, a rectangular pulse signal) to the LD driving section 12 to supply drive current to the light emitter.

In step W2, the light-receptive sensitivity adjusting unit 46f obtains a signal output from the waveform processing circuit of each light detection system (light receiver). The variations in light-receptive sensitivity of the plurality of light detection systems are reflected in the obtained plurality of signals represents.

In step W3, the light-receptive sensitivity adjusting unit 46f adjusts the light-receptive sensitivities of the plurality of light detecting systems based on the obtained plurality of signals.

Specifically, the light-receptive sensitivity adjusting unit 46f sets the bias applied to the gain of a variable-gain amplifier (VGA) or an avalanche photodiode (APD) of each of the light detection systems such that the plurality of light detection systems corresponding to the light emitter has the substantially same light-receptive sensitivity, that is, the output signals of the waveform processing circuits of the plurality of light detection systems has the substantially same peak. The light-receptive sensitivity adjusting unit 46f further stores the set value in the storage unit 46b.

Then, it is preferable to set the bias applied to the gain of the VGA and the APD to the set value in the ranging mode 3 to be executed next.

The object detector 100 according to the first embodiment includes a light source system, a plurality of light detection systems, and an optical system. The light source system includes a light source 11 including at least one light emitter (for example an LD) and an LD drive section 12. The object detector 100 projects at least some of light rays emitted from the light source system to a projection range (an effective scanning area). The object detector 100 receives light rays reflected or scattered from an object in the projection range using the light detection systems each including a light receiver (for example, a PD), so as to detect information regarding the object (object information). In the object detector 100, the optical system generates a first optical path (optical path for detecting object information) and a second optical path (optical path for detecting the conditions of the light receivers and the light emitters) disposed in the optical path of light emitted from the light source system. The first optical path guides at least some light rays of the light emitted from the light source system to the projection range. The second optical path guides some other light rays of the light emitted from the light source system to at least two of a plurality of light receivers without guiding said some other light rays to the projection range.

The "plurality of light detection systems" includes at least different light receivers and may have separate circuit structures in a subsequent stage of the light receivers. Alternatively, at least part of the circuit structure in the subsequent state may be common between the light receivers.

In this case, since the optical system is configured such that at least some other light rays of the light emitted from the light emitter strike at least two light receivers, whether the light source system and each light detection system operate normally or are in failure can be determined based on an output of at least two light detection systems including at least two light receivers. The expression "output of a light detection systems" means an output of a light receiver, or an output of a circuit in a subsequent stage of the light receiver.

In other words, each of the plurality of light receivers outputs a signal according to the amount of light received by the light receiver. The object detector compares at least two signals output from at least two light receivers or at least two signals based on the at least two signals, and based on the comparison result, detects the conditions of the light source system and the light detection system.

Further, the conditions of the light source system include the condition of the light source 11 and the condition of the LD drive section 12 (presence or absence of deterioration, breakage, etc. of circuit elements and wiring constituting the LD drive section 12). The condition of the LD drive section 12 can be detected by providing an ammeter for measuring the current flowing through the LD, or a voltmeter for measuring the voltage across the LD, for example.

The condition of the light detection system includes the condition of the light detector including a plurality of light receivers and the condition of the signal processing system at the subsequent stage of the light detector.

For example, when the outputs of at least two light detection systems are normal, it is determined that the light source system and the at least two light detection systems are operating normally. When the outputs of some of the at least two light detection systems are not normal (including zero (0)), it is determined that said some of the light detection systems are in failure. Further, when the output of all of the at least two light detection systems are not normal (including zero (0)), it is determined that the light source system is in failure.

Note that since all of the at least two light detection systems are less likely to be in failure (out of order), no problem practically occurs.

Hence, the object detector 100 according to the first embodiment is capable of detecting the conditions of the light source system and each light detection system without a light receiver dedicated to detect the condition of the light source system and a light receiver dedicated to detect the condition of each light detection system.

That is, the object detector 100 according to the first embodiment can detect the conditions of the light source system and each light detection system (normal/abnormal (in failure)) while substantially preventing cost increase and enlargement of the apparatus size.

Further, it is preferable that the above-mentioned conditions include variations in the light-receptive sensitivity of the plurality of light detection systems. The light-receptive sensitivity (including the circuit gain) of the light detection system is a parameter closely related to the ranging performance. With the variations in light-receptive sensitivity, the ranging performance of each light detection system, that is, each ranging field (each partition) can be detected.

Further, it is preferable that at least one light emitter includes a plurality of light emitters, and light beams emitted from at least two of the plurality of light emitters strike the same one (ones) of the plurality of light receivers. In this case, at least two light emitters correspond to the same light receiver and at least two light receivers correspond to the same light emitter. Accordingly, the variations in the amount of light emission of at least two light emitters and the variations in the light-receptive sensitivity of each light detection system including at least two light receivers can be obtained.

The object detector 100 according to the second embodiment includes a plurality of light source systems and a light detection system. Each of the plurality of light source systems includes a light emitter (for example an LD). The object detector 100 projects at least some light rays of light emitted from each light source system to a projection range (an effective scanning area). The light detection system including a light receiver (for example, a PD) receives light rays reflected or scattered from an object in the projection range so as to detect information regarding the object (object information). The object detector 100 generates a first optical path (optical path for detecting object information) and a second optical path (optical path for detecting the conditions of the light source systems and the light detection system) disposed in the optical path of light emitted from each of the light emitters. In the first optical path, at least some light rays of the light emitted from each of the light source systems are guided to the projection range. In the second optical path, some other light rays of the light emitted from each of at least two of the light source systems are guided to the light receiver of the light detection system and not guided to the projection range.

The "plurality of light source systems" includes at least different light emitters and may have separate circuit structures in a preceding stage of the light emitters. Alternatively, at least part of the circuit structure in the preceding state may be common between the light emitters.

In this case, since the optical system is configured such that at least some other light rays of each of at least two light beams emitted from the light emitter strike the light receiver, whether each light source system and the light detection system operate normally or are in failure can be determined based on the output of the light detection systems including the light receiver.

The expression "output of a light detection systems" means an output of a light receiver or an output of a circuit in a subsequent stage of the light receiver.

In other words, the light receiver outputs a signal according to the amount of light received by the light receiver. The object detector compares at least two signals output from the light receiver or at least two signals based on the at least two signals, and based on the comparison result, detects the conditions of the plurality of light source systems and the light detection system.

For example, when at least two light emitters are rendered electrically conductive at different timings and the output of the light detection system for each light emitter is normal, it is determined that at least two light source systems including the at least two light emitters and the light detection system operate normally (not in failure). When at least two light emitters are rendered electrically conductive at different timings and the output of the light detection system for some (one) of the at least two light emitters is not normal (including 0), it is determined that some light source systems including said some (one) light emitters are in failure. Further, when at least two light emitters are rendered electrically conductive at different timings and all the output of the light detection system for each light emitter is not normal (including 0), it is determined that the light detection system is in failure.

Note that since all of the at least two light source systems including at least two light emitters are less likely to be in failure (out of order), no problem practically occurs.

Hence, the object detector 100 according to the second embodiment is capable of detecting the conditions of each light source system and a light detection system without a light receiver dedicated to detect the condition of each light source system and a light receiver dedicated to detect the condition of a light detection system.

That is, the object detector 100 according to the second embodiment can detect the conditions of each light source system and a light detection system (normal/abnormal (in failure)) while substantially preventing cost increase and enlargement of the apparatus size.

Further, it is preferable that the above-mentioned conditions include variations in the amount of light emission of at least two light emitters. The amount of light emission of light emitters is a parameter closely related to the ranging performance. With the variations in the amount of light emission of light emitters, the ranging performance of each light emitter, that is, each ranging field (each partition) can be detected.

Further, the optical system may include a rotating light deflector (for example, a rotating mirror) having at least one reflecting surface disposed in the first optical path and not in the second optical path. In this case, the condition detection is performed during the time in which light emitted from the light source does not strike the light deflector. Accordingly, the robustness against the rotational jitter of the light deflector increases. Further, with such a configuration, light can be guided to the light detector with a simple optical system without occurrence of scanning line bending in detecting multilayer with multiple beams.

Further, the optical system may include a rotating light deflector (for example, a rotating mirror) having at least one reflecting surface disposed in the optical path of light emitted from the light source, in which the first optical path and not in the second optical path are generated at different timings. In this case, the width of the object detector in the width direction can be reduced.

In the object detector, the detection distance (distance with which the object detection is possible) increases as the amount of light emission of the light emitter increases. Accordingly, the peak of the amount of light emission might be several tens of watts or more in some cases, and if the light is directly guided to the light detector, the light receiver and the circuit in a subsequent stage of the light receiver are more likely to reach the level of voltage saturation.

To avoid such a situation, the amount of light emitted from (light emission of) the light emitter in detecting the conditions may be reduced as compared to the time of the object information detection. Alternatively, the light-receptive sensitivity of the light detection system in detecting the conditions may be reduced as compared to the time of the object information detection.

In this case, the voltage saturation in the light detection system can be substantially prevented. Further, the conditions of the light source system and the light detection system when the light detection system has not reached the level of voltage saturation can be detected more accurately than when the light detection system has reached the level of voltage saturation.

It is also preferable to monitor the signal output from the light detection system at the time of detecting the conditions of the light source system and the light detection system and to adjust the light-receptive sensitivity of the light detection system so that the signal value approaches a given value.

In this case, the light-receptive sensitivity of the light detection system is made substantially constant, and accordingly the ranging performance can be maintained substantially constant. Further, the system performance can be maintained at constant when the amount of light emission of the light emitter fluctuate.

The configuration in which the comparator is used to detect object information is advantageous from the viewpoint of cost because a costly A/D converter is not used. However, such a configuration merely can tell whether the voltage input to the comparator is higher or lower than a given value, and accordingly fails to detect the accurate values of the light-receptive sensitivity. Further, if the threshold voltage is minimized as much as possible to detect light reflected or scattered from a distant object or a low-reflective object, abnormality (operational failure) is detected only when the light-receptive sensitivity is significantly lower than the normal value.

In view of such circumstances, the measurement is performed while varying the threshold voltage as a variable value plural times, so as to obtain the light-receptive sensitivity accurately to a certain extent.

Specifically, the object detector 100 includes a binarizing circuit (for example, a comparator) and a control system 46. The binarizing circuit binarizes a signal from a waveform processing circuit at a stage subsequent to the light receiver with reference to a threshold voltage. The control system 46 is capable of adjusting the threshold voltage. The control system 46 preferably sets the threshold voltage such that the threshold voltage in detecting the condition is higher than in detecting the object information.

Further, the optical system may include a branch element (for example, a beam splitter 27) that separates light from the light source into light beams. The optical system may further project one light beam (the first light beam) from the branch element to the projection range, and guide another light beam (the second light beam) from the branch element to the light detection system.

It is preferable that the branch element transmits some light rays of the light from the light source as the first light beam and reflects some other light rays as the second light beam.

In addition, the optical system preferably includes a combiner (for example, a beam splitter 28) that guides the second light beam from the branch element to the light detection system.

In addition, it is preferable that the combiner leads the light in which the first light beam is reflected or scattered by the object to the light detection system.

It is also preferable that the combiner reflects the second light beam from the branch element toward the light detection system and transmits light of the first light beam that has been reflected or scattered by the object toward the light detection system.

It is preferable that the optical system includes a light deflector disposed both in the optical path of the first light beam from the branch element and in the optical path of light of the first light beam that has been reflected or scattered by the object.

The above-described optical system may include a light amount attenuating unit for attenuating the amount of light of the second light beam in the optical path of the second light beam between the branch element and the combine. In this case, the light detection system can be substantially prevented from reaching the level of voltage saturation in detecting the conditions.

Further, the above-described optical system may include a light deflector that deflects light from the light source, to project light deflected in one direction (a first direction) by the deflector toward the projection range, and guide light deflected in the other direction (a second direction) to the light detection system.

The above-described optical system may include a light amount attenuating unit in the optical path of the light deflected in the second direction between the light deflector and the light detection system. In this case, the light detection system can be prevented from reaching the level of voltage saturation in detecting the conditions.

The vehicle (mobile object 600 in FIG. 32) including the object detector 100 and the vehicle (mobile object 600) on which the object detector 100 is mountable enables the detection performance of the object detector 100 to be grasped at any time, which allows for measurement (for example, replacement of parts of the light source system or the light detection system) to maintain safety at any time. As a result, it is possible to achieve a vehicle (mobile object 600)excellent in maintenance of collision avoidance.

The object detection method according to the first embodiment includes projecting at least some of light rays emitted from a light source system including a light emitter to a projection range; receiving the light rays reflected or scattered from an object in the projection range using a plurality of light detection systems each including a light receiver; and detecting information regarding the object (object information). The object detection method according to the first embodiment further includes generating a first optical path (optical path for detecting object information) and generating a second optical path (optical path for detecting the conditions of the light receivers and the light emitters). The first optical path guides the at least some of light rays emitted from the light source system to the projection range. The second optical path guides some other light rays of the light rays emitted from the light source system to at least two of a plurality of light receivers without guiding said some other light rays to the projection range.

The object detection method according to the first embodiment can detect the conditions of a light source system and each light detection system (normal/abnormal (in failure)) while substantially preventing cost increase and enlargement of the apparatus size.

The object detection method according to the second embodiment includes projecting at least some of light rays emitted from each of a plurality of light source systems each including a light emitter to a projection range; receiving the light rays reflected or scattered from an object in the projection range using a light detection systems including a light receiver; and detecting information regarding the object (object information). The object detection method according to the second embodiment further includes generating a first optical path (optical path for detecting object information) and generating a second optical path (optical path for detecting the conditions of the light receivers and the light emitters). The first optical path guides the at least some of light rays emitted from each of a plurality of light emitters of the light source systems to the projection range. The second optical path guides some other light rays of the light rays emitted from each of at least two of the plurality of light emitters to the light receiver without guiding said some other light rays to the projection range.

The object detection method according to the second embodiment can detect the conditions of each light source system and a light detection system (normal/abnormal (in failure)) while substantially preventing cost increase and enlargement of the apparatus size.

Further, the above-described embodiments may be appropriately modified without departing from the spirit of the present disclosure.

For example, the number and arrangement of the light emitters in the light source and the number and arrangement of the light receivers in the light detector are not limited to those described in the above embodiments and may be appropriately changed.

In the ranging process, in addition to the ranging mode and the failure detection mode, at least one of the light-emission amount variation correction mode and the light-receptive sensitivity variation correction mode may be executed.

During the ranging mode in the ranging process, for example, in a period from one pulse light emission to the next pulse emission (between two adjacent pulses of the LD drive signal), the failure detection mode, the light-emission amount variation correction mode or the light-receptive sensitivity variation correction mode may be executed.

Further, when a plurality of light emitters emits light at different timings, a common LD drive section may be designed using a selector that generates a plurality of LD drive signals having different delay times (including zero) from one LD drive signal.

Further, when a plurality of light receivers receives light at the same timing, each light receiver may output current to one waveform processing circuit through a selector at a different timing.

Further, the conditions (for example, light-receptive sensitivity) of the light source system and the light detection system may be detected with a plurality of or one light receiver as the synchronous detection PS, using the same method as in detecting the conditions (for example, light-receptive sensitivity) of the light source system and the light detection system.

In some embodiments, an electronic control unit (ECU) of a vehicle on which the object detector 100 is mounted may perform a part of a calculation operation executed by the control system 46.

Filters such as a low-pass filter and a high-pass filter may be incorporated in the waveform processing circuit. Such a filter is preferably connected between a signal amplifier and a binarizing circuit when the waveform processing circuit includes the signal amplifier. However, without the signal amplifier in the waveform processing circuit, the filter is preferably connected between a current-voltage converter and the binarizing circuit.

The phototransmitter system 10 is a scanning phototransmitter system that employs a rotating mirror 26 as a light deflector. Alternatively, the phototransmitter system 10 may be non-scanning system without a light deflector. The non-scanning phototransmitter system may include at least a light source, and a lens for adjusting the projection range may be provided at the subsequent stage of the light source. A light emitter array in which a plurality of light emitters is arranged in an array, is preferably used as a light source of a non-scanning phototransmitter system. In this case, the detection region can be divided and detected, and the conditions of the light source system and the light detection system can be detected.

Examples of the light emitter array include an LD array, in which a plurality of laser diodes are unidimensionally or two-dimensionally arranged, and a Vertical Cavity Surface Emitting Laser (VCSEL) array, in which the VCSEL is unidimensionally or two-dimensionally arranged. Examples of the LD 11 array, in which a plurality of laser diodes is unidimensionally arranged, include a stack LD array, in which a plurality of laser diodes is stacked, and another type of LD array, in which a plurality of laser diodes is horizontally lined up. As each light emitter of the light source array, a VCSEL may be used instead of the LD, so as to arrange the light emitters at a higher density (more light emitting points may be included within the array).

In the light detection system, a light receiver array in which a plurality of light receivers (for example, PD, APD, VCSEL, etc.) are arranged one-dimensionally or two-dimensionally may be used as the light detector. In this case, the detection field can be divided into partitions, and the conditions of the light source system and the light detection system can be detected.

The projection optical system may not include the coupling lens. Alternatively, the projection optical system may include another type of lens.

The projection optical system and the light receiving optical system may not include the reflecting mirror. That is, light emitted from the LD 11 may be caused to strike the rotating mirror without the optical path folded.

The light receiving optical system may not include a light receiving lens. Alternatively, the light receiving optical system may include another type of optical element, such as a condenser mirror.

According to the present embodiment, a vehicle is taken as an example for the mobile object, on which the object detector 100 is mounted. Examples of the mobile object include an airplane, a vessel, and a robot.

According to a mode of the present disclosure, an object detector (100) includes a light source system (11 and 12) including a light emitter (11) to emit light; an optical system (20 and 30) disposed in an optical path of the light emitted from the light emitter (11); a light detection system (41, 42, and 44) including a light receiver (42) to receive the light reflected or scattered from an object in a projection range; and a control system (46) to detect information regarding the object based on the light received by the light detection system (41, 42, and 44). The optical system is configured to generate a first optical path to guide at least some light rays of the light to the projection range; and a second optical path to guide at least some other light rays of the light to the light detection system (42, 41, and 44) without guiding the at least some other light rays to the projection range.

According to another mode of the present disclosure, an object detector (100) includes a plurality of light source systems (11 and 12) including light emitters (11), respectively, to emit light; an optical system (20 and 30) disposed in an optical path of the light emitted from each of the light emitters (11); a light detection system (41, 42, and 44) including a light receiver (42) to receive the light reflected or scattered from an object in a projection range; and a control system (46) to detect information regarding the object based on the light received by the light detection system (41, 42, and 44). The optical system is configured to generate a first optical path to guide at least some light rays of the light to the projection range and a second optical path to guide at least some other light rays of the light to the light detection system (42, 41, and 44) without guiding the at least some other light rays to the projection range. The second optical path is to guide the at least some other light rays of light emitted from each of at least two of the light emitters (11), to the light receiver.

Further, the specific numerical values and shapes in the above-described embodiments, variations, and examples are merely one example and are appropriately modified without departing from the scope of the present invention as defined by the claims.

As is apparent from the above-description, the object detector 100, the sensing apparatus 1000, a vehicle(mobile object 600), the method for detecting an object, and ranging processes 1 to 4 according to the embodiments of the present disclosure are the technology that measures the distance to an object, utilizing the Time of Flight (TOF) method. Such a technology is widely used in the industries of the motion-capture technology, the range instruments, and the three-dimensional shape measurement technology, in addition to sensing a mobile object. In other words, the object detector and the sensing apparatus according to the embodiments of the present disclosure may be mounted on other objects other than the mobile object.

Hereinafter, a description is provided of process of thinking, in which the inventor has conceived of the above-described embodiments.

There is a LiDAR as an in-vehicle device to detect the presence or absence of an object ahead of a running vehicle and the distance to the object. There are various types of optical systems for LiDARs. In the optical system as disclosed in JP-2011-128112-A, JP-2009-063339-A, JP-2012-107984-A, and JP-2009-069003-A, a light source emits a laser beam, and a rotating mirror scans the laser beam emitted from the light source and reflects the laser beam that has been reflected or scattered from a target (an object to be measured). Thus, a light detector of the optical systems detects the laser beam reflected by the rotating mirror. As a result, the presence or absence of the object within a desired range and the distance to the object can be detected. Such an LiDAR (a scanning LiDAR) scans both the laser beam from the light source and a detection field of the light detector (that is, the rotating mirror scans the light beam reflected from the target to the light detector). Such a scanning LiDAR is advantageous from the viewpoint of the accuracy of detection and the detection distance because a laser beam is focused only on an area to be detected. The scanning LiDAR is also advantageous from the viewpoint of cost of the light detector because the detection field of the light detector can be minimized.

In the LiDARs, there is a need to check whether the light source system (including the light source and the light source drive circuit) and the light detection system (including the light detector and the signal processing circuit) are normally operating during the measurement operation or in the time between the measurement operations.

In an example method of determining whether the light source system is normally operating, a dedicated light detector is provided to detect the conditions of the light source system.

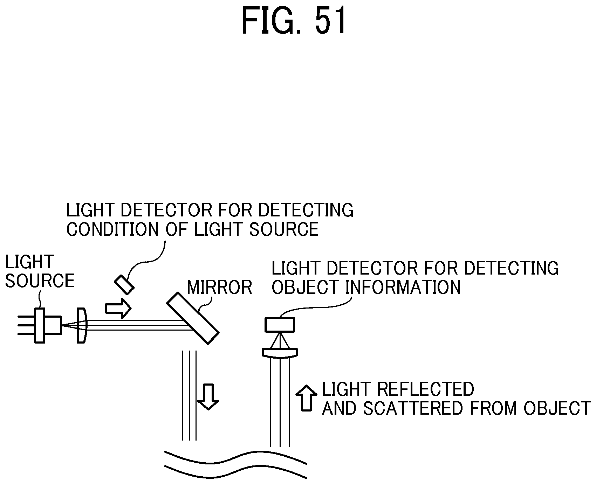

As a specific example of such a configuration, the configuration of the LiDAR according to a comparative example 2 is illustrated in FIG. 51. In the comparative example 2 as illustrated in FIG. 51, a light detector for detecting the conditions of the light source system is disposed at a position that leaked light rays reach out of a light beam emitted from the light source. Further, the LiDAR according to the comparative example 2 detects the output of the light detector at the timing at which the light source is driven to emit light, so as to determine whether the light source system is operating normally.

According to another example method as disclosed in JP-2002-31685-A, an optical path is generated in which a light beam is emitted from a light source when the rotating mirror reaches a predetermined angle, and the light beam is reflected by the rotating mirror and then reflected at a predetermined position inside the housing to thus strike the light detector for detecting the object information.

However, in the method illustrated in FIG. 51, the light detector for detecting the conditions of the light source system is disposed at a position deviated from the intended optical path used for detecting the object information in order to obtain a sufficient detection field, so there is no choice but to detect leaked light. The method in FIG. 51 fails to increase the accuracy of detection of the conditions of the light source system, and also induces an increase in cost and size due to the provision of a dedicated light detector for detecting the condition of the light source system. Further, the method in FIG. 51 fails to detect the conditions of the light detector for detecting the object information.

Further, the method disclosed in JP-2002-31685-A fails to determine which is in failure between the light source system and the light detection system when an output signal of the light detection system including the light detector is abnormal in detecting the conditions of the light source system including the light source. For this reason, it is impossible to properly select a measurement such as "increase or reduce the amount of light emission of the light source", "increase or reduce the light-receptive sensitivity of the light detection system", or "issue a warning and stop the system".

That is, there is room for improvement in the methods of FIG. 51 and JP-2002-31685-A from the viewpoints of detecting the conditions of the light source system and the light detection system while substantially preventing cost increase and enlargement of the apparatus size (without providing a dedicated light detector or a dedicated light source used to detect the conditions of the light source system and the light detection system).

In view of the above, the present inventors have proposed an object detector and an object detection method capable of detecting the conditions of a light source system and a light detecting system while substantially preventing cost increase and upsizing of the object detector, and a mobile object on which the object detector is mountable. Although the embodiments of the present disclosure have been described above, the present disclosure is not limited to the embodiments described above, but a variety of modifications can naturally be made within the scope of the present disclosure.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An object detector (100) comprising:
a plurality of light source systems (11, 12) each including a light emitter (11) to emit light;
an optical system (20, 30) disposed in an optical path of the light emitted from the light emitters (11);
a plurality of light detection systems (41, 42, 44) each including a light receiver (42) to receive the light reflected or scattered from an object in a projection range; and
a control system (46) to detect information regarding the object based on the light received by the light detection system (41, 42, 44); wherein:
the optical system is configured to generate:
a first optical path to guide first light rays of the light to the projection range; and
a second optical path to guide second light rays of the light emitted from a light emitter of each of at least two of the plurality of light source systems to a light receiver of each of at least two of the plurality of light detection systems (42, 41, 44) without guiding the second light rays to the projection range,
the light detection systems (41, 42, 44) are configured to output a signal according to an amount of light received by the respective light receiver (42), and
the control system (46) is configured to detect conditions of the light source systems (11, 12) and the light detection systems (41, 42, 44) based on the second optical path light rays and on at least two signals output from the at least two light detection systems.

2. The object detector (100) according to claim 1,
wherein the conditions of the light detection systems include variations in light-receptive sensitivity of the light receiver (42) of each of the at least two of the light detection systems.

3. The object detector (100) according to claim 1,
wherein the control system (46) is configured to detect conditions of the light source systems and the light detection system (41, 42, and 44) based on at least two signals output from a light detection system that has received light emitted from the light emitter (11) of each of the at least two of the plurality of light source systems.

4. The object detector (100) according to claim 3,
wherein the conditions of the light source systems include variations in amount of light emission of the light emitter (11) of each of the at least two light source systems.

5. The object detector (100) according to any of claims 1 to 4,
wherein an amount of light emission of the light emitter (11) in detecting the conditions of the light source system (11 and 12) and the light detection system (41, 42, and 44) is set smaller than an amount of light emission of the light emitter (11) in detecting the information regarding the object.

6. The object detector (100) according to any of claims 1 to 4,
wherein a light-receptive sensitivity of the light receiver (42) in detecting the conditions of the light source system (11 and 12) and the light detection system (41, 42, and 44) is set smaller than a light-receptive sensitivity of the light receiver (42) in detecting the information regarding the object.

7. The object detector (100) according to any of claims 1 to 6,
wherein in detecting the conditions of the light source system (11 and 12) and the light detection system (41, 42, and 44), the control system (46) is configured to:
monitor a signal output from the light detection system (41, 42, and 44); and
adjust the light-receptive sensitivity of the light receiver (42) such that a value of the signal approaches a given threshold value.

8. The object detector (100) according to any of claims 1 to 7,
wherein the light detection system (41, 42, and 44) further includes a binarizing circuit (44) configured to binarize a signal output from the light receiver (42) based on a threshold voltage, and
wherein the control system (46) is configured to set a first threshold voltage in detecting the conditions of the light source system (11 and 12) and the light detection system (41, 42, and 44) higher than a second threshold voltage in detecting the information regarding the object.

9. The object detector (100) according to any of claims 1 to 8,
wherein the optical system (20 and 30) includes a branch element (27) to separate the light emitted from the light source system (11 and 12) into a first light beam and a second light beam, and
wherein the optical system (20 and 30) is configured to guide the first light beam to the projection range and guide the second light beam to the light detection system (41, 42, and 44).

10. The object detector (100) according to claim 9
wherein the branch element (27) is configured to transmit the first light beam and reflect the second light beam.

11. The object detector (100) according to claim 9 or 10,
wherein the optical system (20 and 30) further includes a light deflector (26) disposed in an optical path of the first light beam and in an optical path of light reflected or scattered from the object.

12. The object detector (100) according to any of claims 1 to 8,
wherein the optical system (20 and 30) further includes a light deflector (26) configured to deflect the light emitted from the light source system (11 and 12), to project the deflected light in a first direction toward the projection range, and guide the light deflected in a second direction to the light detection system (41, 42, and 44).

13. A mobile object (600) comprising the object detector (100) according to any of claims 1 to 12.

14. A method of detecting an object comprising:
emitting light from a plurality of light source systems (11, 12) each including a light emitter (11);
projecting first light rays of the light emitted from the light source systems (11, 12) to a projection range via a first optical path;
guiding second light rays of the light to the light detection system (42, 41, 44) via a second optical path without guiding the second light rays to the projection range,
receiving light reflected or scattered from an object in the projection range; and
detecting information regarding the object based on the light received in the receiving, wherein
the second optical path guides the second light rays to a light receiver of each of at least two of the plurality of light detection systems, and guides the second light rays emitted from a light emitter of each of at least two of the plurality of light source systems to a light receiver of a light detection system; and
detecting conditions of the light source systems (11, 12) and the light detection systems (41, 42, 44) based on the second optical path light rays and on at least two signals output from the at least two light detection systems.

## Patentansprüche

1. Objektdetektor (100), der Folgendes umfasst:
eine Vielzahl von Lichtquellensystemen (11, 12), die jeweils einen Lichtsender (11) enthalten, um Licht zu emittieren;
ein optisches System (20, 30), das in einem optischen Pfad des von den Lichtsendern (11) emittierten Lichts angeordnet ist;
eine Vielzahl von Lichterfassungssystemen (41, 42, 44), die jeweils einen Lichtempfänger (42) enthalten, um das von einem Objekt in einem Projektionsbereich reflektierte oder gestreute Licht zu empfangen; und
ein Steuersystem (46), um Informationen bezüglich des Objekts basierend auf dem von dem Lichterfassungssystem (41, 42, 44) empfangenen Licht zu erfassen; wobei:
das optische System dafür konfiguriert ist, Folgendes zu erzeugen:
einen ersten optischen Pfad, um erste Lichtstrahlen des Lichts zu dem Projektionsbereich zu leiten; und
einen zweiten optischen Pfad, um zweite Lichtstrahlen des Lichts, die von einem Lichtsender von jedem von mindestens zwei der Vielzahl von Lichtquellensystemen ausgesendet werden, zu einem Lichtempfänger von jedem von mindestens zwei der Vielzahl von Lichterfassungssystemen (42, 41, 44) zu leiten, ohne die zweiten Lichtstrahlen zu dem Projektionsbereich zu leiten,
die Lichterfassungssysteme (41, 42, 44) dafür konfiguriert sind, ein Signal in Abhängigkeit von einer von dem jeweiligen Lichtempfänger (42) empfangenen Lichtmenge auszugeben, und
das Steuersystem (46) dafür konfiguriert ist, Zustände der Lichtquellensysteme (11, 12) und der Lichterfassungssysteme (41, 42, 44) basierend auf den Lichtstrahlen des zweiten optischen Pfades und auf mindestens zwei von den mindestens zwei Lichterfassungssystemen ausgegebenen Signalen zu erfassen.

2. Objektdetektor (100) nach Anspruch 1,
wobei die Bedingungen der Lichterfassungssysteme Variationen in der Lichtempfangsempfindlichkeit des Lichtempfängers (42) von jedem der mindestens zwei Lichterfassungssysteme enthalten.

3. Objektdetektor (100) nach Anspruch 1,
wobei das Steuersystem (46) dafür konfiguriert ist, Zustände der Lichtquellensysteme und des Lichterfassungssystems (41, 42 und 44) basierend auf mindestens zwei Signalen zu erfassen, die von einem Lichterfassungssystem ausgegeben werden, das Licht empfangen hat, das von dem Lichtsender (11) jedes der mindestens zwei der Vielzahl von Lichtquellensystemen emittiert wird.

4. Objektdetektor (100) nach Anspruch 3,
wobei die Bedingungen der Lichtquellensysteme Schwankungen in der Menge der Lichtemission des Lichtsenders (11) jedes der mindestens zwei Lichtquellensysteme enthalten.

5. Objektdetektor (100) nach einem der Ansprüche 1 bis 4,
wobei ein Betrag der Lichtemission des Lichtsenders (11) bei der Erfassung der Bedingungen des Lichtquellensystems (11 und 12) und des Lichterfassungssystems (41, 42 und 44) kleiner eingestellt ist als ein Betrag der Lichtemission des Lichtsenders (11) bei der Erfassung der Informationen bezüglich des Objekts.

6. Objektdetektor (100) nach einem der Ansprüche 1 bis 4,
wobei eine Lichtempfangsempfindlichkeit des Lichtempfängers (42) bei der Erfassung der Bedingungen des Lichtquellensystems (11 und 12) und des Lichterfassungssystems (41, 42 und 44) kleiner eingestellt ist als eine Lichtempfangsempfindlichkeit des Lichtempfängers (42) bei der Erfassung der Informationen bezüglich des Objekts.

7. Objektdetektor (100) nach einem der Ansprüche 1 bis 6,
wobei bei der Erfassung der Zustände des Lichtquellensystems (11 und 12) und des Lichterfassungssystems (41, 42 und 44) das Steuersystem (46) für Folgendes konfiguriert ist:
Überwachen eines Signalausgangs von dem Lichterfassungssystem (41, 42 und 44); und
Einstellen der Lichtempfangsempfindlichkeit des Lichtempfängers (42), so dass sich ein Wert des Signals einem vorgegebenen Schwellenwert nähert.

8. Objektdetektor (100) nach einem der Ansprüche 1 bis 7,
wobei das Lichterfassungssystem (41, 42 und 44) ferner eine Binarisierungsschaltung (44) enthält, die dafür konfiguriert ist, ein von dem Lichtempfänger (42) ausgegebenes Signal basierend auf einer Schwellenspannung zu binarisieren, und
wobei das Steuersystem (46) dafür konfiguriert ist, eine erste Schwellenspannung beim Erfassen der Bedingungen des Lichtquellensystems (11 und 12) und des Lichterfassungssystems (41, 42 und 44) höher als eine zweite Schwellenspannung beim Erfassen der Informationen bezüglich des Objekts einzustellen.

9. Objektdetektor (100) nach einem der Ansprüche 1 bis 8,
wobei das optische System (20 und 30) ein Verzweigungselement (27) enthält, um das von dem Lichtquellensystem (11 und 12) emittierte Licht in einen ersten Lichtstrahl und einen zweiten Lichtstrahl zu trennen, und
wobei das optische System (20 und 30) dafür konfiguriert ist, den ersten Lichtstrahl zu dem Projektionsbereich zu leiten und den zweiten Lichtstrahl zu dem Lichterfassungssystem (41, 42 und 44) zu leiten.

10. Objektdetektor (100) nach Anspruch 9,
wobei das Verzweigungselement (27) dafür konfiguriert ist, den ersten Lichtstrahl durchzulassen und den zweiten Lichtstrahl zu reflektieren.

11. Objektdetektor (100) nach Anspruch 9 oder 10,
wobei das optische System (20 und 30) ferner einen Lichtablenker (26) enthält, der in einem optischen Pfad des ersten Lichtstrahls und in einem optischen Pfad des von dem Objekt reflektierten oder gestreuten Lichts angeordnet ist.

12. Objektdetektor (100) nach einem der Ansprüche 1 bis 8,
wobei das optische System (20 und 30) ferner einen Lichtablenker (26) enthält, der dafür konfiguriert ist, das von dem Lichtquellensystem (11 und 12) emittierte Licht abzulenken, das abgelenkte Licht in eine erste Richtung auf den Projektionsbereich zu projizieren und das in eine zweite Richtung abgelenkte Licht zu dem Lichterfassungssystem (41, 42 und 44) zu führen.

13. Mobiles Objekt (600), das den Objektdetektor (100) nach einem der Ansprüche 1 bis 12 umfasst.

14. Verfahren zur Erfassung eines Objekts, das Folgendes umfasst:
Emittieren von Licht von einer Vielzahl von Lichtquellensystemen (11, 12), die jeweils einen Lichtsender (11) enthalten;
Projizieren erster Lichtstrahlen des von den Lichtquellensystemen (11, 12) emittierten Lichts in einen Projektionsbereich über einen ersten optischen Pfad;
Leiten zweiter Lichtstrahlen des Lichts zu dem Lichterfassungssystem (42, 41, 44) über einen zweiten optischen Pfad, ohne die zweiten Lichtstrahlen zu dem Projektionsbereich zu leiten,
Empfangen von Licht, das von einem Objekt im Projektionsbereich reflektiert oder gestreut wird; und
Erfassen von Informationen bezüglich des Objekts basierend auf dem im Empfangsbereich empfangenen Licht, wobei
der zweite optische Pfad die zweiten Lichtstrahlen zu einem Lichtempfänger von jedem von mindestens zwei der Vielzahl von Lichterfassungssystemen leitet und die zweiten Lichtstrahlen, die von einem Lichtsender von jedem von mindestens zwei der Vielzahl von Lichtquellensystemen emittiert werden, zu einem Lichtempfänger eines Lichterfassungssystems leitet; und
Erfassen von Zuständen der Lichtquellensysteme (11, 12) und der Lichterfassungssysteme (41, 42, 44) basierend auf den Lichtstrahlen des zweiten optischen Pfades und auf mindestens zwei von den mindestens zwei Lichterfassungssystemen ausgegebenen Signalen.

## Revendications

1. Détecteur d'objet (100) comprenant :
une pluralité de systèmes de sources de lumière (11, 12) comprenant chacun un émetteur de lumière (11) pour émettre de la lumière ;
un système optique (20, 30) disposé dans un trajet optique de la lumière émise par les émetteurs de lumière (11) ;
une pluralité de systèmes de détection de lumière (41, 42, 44) comprenant chacun un récepteur de lumière (42) pour recevoir la lumière réfléchie ou diffusée par un objet dans une plage de projection ; et
un système de commande (46) pour détecter des informations concernant l'objet sur la base de la lumière reçue par le système de détection de lumière (41, 42, 44) ; dans lequel :
le système optique est configuré pour générer :
un premier trajet optique pour guider des premiers rayons lumineux de la lumière vers la plage de projection ; et
un deuxième trajet optique pour guider des deuxièmes rayons lumineux de la lumière émise par un émetteur de lumière de chacun d'au moins deux de la pluralité de systèmes de source de lumière vers un récepteur de lumière de chacun d'au moins deux de la pluralité de systèmes de détection de lumière (42 , 41, 44) sans guider les deuxièmes rayons lumineux vers la plage de projection,
les systèmes de détection de lumière (41, 42, 44) sont configurés pour émettre un signal en fonction d'une quantité de lumière reçue par le récepteur de lumière respectif (42), et
le système de commande (46) est configuré pour détecter les conditions des systèmes de source de lumière (11, 12) et des systèmes de détection de lumière (41, 42, 44) sur la base des rayons lumineux du deuxième trajet optique et d'au moins deux signaux émis par les au moins deux systèmes de détection de lumière.

2. Détecteur d'objet (100) selon la revendication 1,
dans lequel les conditions des systèmes de détection de lumière comprennent des variations de sensibilité de réception de lumière du récepteur de lumière (42) de chacun des au moins deux des systèmes de détection de lumière.

3. Détecteur d'objet (100) selon la revendication 1,
dans lequel le système de commande (46) est configuré pour détecter les conditions des systèmes de source de lumière et du système de détection de lumière (41, 42 et 44) sur la base d'au moins deux signaux émis par un système de détection de lumière qui a reçu de la lumière émise par l'émetteur de lumière (11) de chacun des au moins deux de la pluralité de systèmes de source de lumière.

4. Détecteur d'objet (100) selon la revendication 3,
dans lequel les conditions des systèmes de source de lumière comprennent des variations de quantité d'émission de lumière de l'émetteur de lumière (11) de chacun des au moins deux systèmes de source de lumière.

5. Détecteur d'objet (100) selon l'une quelconque des revendications 1 à 4,
dans lequel une quantité d'émission de lumière de l'émetteur de lumière (11) lors de la détection des conditions du système de source de lumière (11 et 12) et du système de détection de lumière (41, 42 et 44) est réglée pour être plus petite qu'une quantité d'émission de lumière de l'émetteur de lumière (11) lors de la détection des informations concernant l'objet.

6. Détecteur d'objet (100) selon l'une quelconque des revendications 1 à 4,
dans lequel une sensibilité de réception de lumière du récepteur de lumière (42) lors de la détection des conditions du système de source de lumière (11 et 12) et du système de détection de lumière (41, 42 et 44) est réglée pour être plus petite qu'une sensibilité de réception de lumière du récepteur de lumière (42) lors de la détection des informations concernant l'objet.

7. Détecteur d'objet (100) selon l'une quelconque des revendications 1 à 6,
dans lequel, lors de la détection des conditions du système de source de lumière (11 et 12) et du système de détection de lumière (41, 42 et 44), le système de commande (46) est configuré pour :
surveiller un signal émis par le système de détection de lumière (41, 42 et 44) ; et
ajuster la sensibilité de réception de lumière du récepteur de lumière (42) de sorte qu'une valeur du signal s'approche d'une valeur de seuil donnée.

8. Détecteur d'objet (100) selon l'une quelconque des revendications 1 à 7,
dans lequel le système de détection de lumière (41, 42 et 44) comprend en outre un circuit de binarisation (44) configuré pour binariser un signal émis par le récepteur de lumière (42) sur la base d'une tension de seuil, et
dans lequel le système de commande (46) est configuré pour régler une première tension de seuil lors de la détection des conditions du système de source de lumière (11 et 12) et du système de détection de lumière (41, 42 et 44) pour être plus grande qu'une deuxième tension de seuil lors de la détection des informations concernant l'objet.

9. Détecteur d'objet (100) selon l'une quelconque des revendications 1 à 8,
dans lequel le système optique (20 et 30) comprend un élément de dérivation (27) pour séparer la lumière émise par le système de source de lumière (11 et 12) en un premier faisceau lumineux et un deuxième faisceau lumineux, et
dans lequel le système optique (20 et 30) est configuré pour guider le premier faisceau lumineux vers la plage de projection et guider le deuxième faisceau lumineux vers le système de détection de lumière (41, 42 et 44).

10. Détecteur d'objet (100) selon la revendication 9,
dans lequel l'élément de dérivation (27) est configuré pour transmettre le premier faisceau lumineux et réfléchir le deuxième faisceau lumineux.

11. Détecteur d'objet (100) selon la revendication 9 ou 10,
dans lequel le système optique (20 et 30) comprend en outre un déflecteur de lumière (26) disposé dans un trajet optique du premier faisceau lumineux et dans un trajet optique de la lumière réfléchie ou dispersée par l'objet.

12. Détecteur d'objet (100) selon l'une quelconque des revendications 1 à 8,
dans lequel le système optique (20 et 30) comprend en outre un déflecteur de lumière (26) configuré pour dévier la lumière émise par le système de source de lumière (11 et 12), pour projeter la lumière déviée dans une première direction vers la plage de projection, et guider la lumière déviée dans une deuxième direction vers le système de détection de lumière (41, 42 et 44).

13. Objet mobile (600) comprenant le détecteur d'objet (100) selon l'une quelconque des revendications 1 à 12.

14. Procédé de détection d'un objet comprenant :
l'émission de lumière par une pluralité de systèmes de sources de lumière (11, 12) comprenant chacun un émetteur de lumière (11) ;
la projection de premiers rayons lumineux de la lumière émise par les systèmes de source de lumière (11, 12) vers une plage de projection via un premier trajet optique ;
le guidage des deuxièmes rayons lumineux de la lumière vers le système de détection de lumière (42, 41, 44) via un deuxième trajet optique sans guider les deuxièmes rayons lumineux vers la plage de projection,
la réception de la lumière réfléchie ou diffusée par un objet dans la plage de projection ; et
la détection d'informations concernant l'objet sur la base de la lumière reçue lors de le réception, dans lequel
le deuxième trajet optique guide les deuxièmes rayons lumineux vers un récepteur de lumière de chacun d'au moins deux de la pluralité de systèmes de détection de lumière, et guide les deuxièmes rayons lumineux émis par un émetteur de lumière de chacun d'au moins deux de la pluralité de systèmes de source de lumière vers un récepteur de lumière d'un système de détection de lumière ; et
la détection de conditions des systèmes de source de lumière (11, 12) et des systèmes de détection de lumière (41, 42, 44) sur la base des rayons lumineux du deuxième trajet optique et d'au moins deux signaux émis par les au moins deux systèmes de détection de lumière.
